# EUROPEAN PATENT SPECIFICATION

(11) **EP 0 633 730 B1**
(45) Date of publication and mention of the grant of the patent: **19.11.1997**
(21) Application number: 93908281.4
(22) Date of filing: 02.03.1993
(51) Int. Cl.: A23G 3/30

(54) **IMPROVED WAX-FREE CHEWING GUMS WITH CONTROLLED SWEETENER RELEASE**
VERBESSERTE WACHSFREIE KAUGUMMIS MIT GESTEUERTER FREISETZUNG VON SÜSSUNGSMITTEL
GOMME A MACHER AMELIOREE, EXEMPTE DE CIRE, A LIBERATION REGULEE D'AGENT EDULCORANT

(30) Priority: 03.03.1992 WO PCT/US92/01686; 30.06.1992 US 906921; 06.11.1992 WO PCT/US92/09615; 29.12.1992 US 996914; 29.12.1992 US 997876; 30.12.1992 US 997732; 30.12.1992 WO PCT/US92/11317
(43) Date of publication of application: 18.01.1995
(73) Proprietor: WM. WRIGLEY JR. COMPANY, Chicago Illinois 60611 (US)
(72) Inventor: SYNOSKY, Steven P., Greenbrook, NJ 08812 (US); GREENBERG, Michael J., Northbrook, IL 60062 (US)
(74) Representative: Hardisty, David Robert
(86) International application number: US9301940
(87) International publication number: WO9317577

(56) References cited:
- WO-A-88/08672
- US-A- 3 857 965
- US-A- 3 984 574
- US-A- 4 816 265
- US-A- 5 023 093
- US-A- 5 039 530

## Description

This application is a continuation-in-part of copending International Application No. PCT/US92/11317, (Case No. 1391/1289), filed on December 30, 1992, which in turn is a continuation-in-part of International Application No. PCT/US92/09615, filed on November 6, 1992, which in turn is a continuation-in-part of PCT/US92/01686, filed on March 3, 1992.

The present invention relates to an improved wax-free chewing gum and particularly to wax-free chewing gum products containing controlled release sweeteners.

U.S. Patent No. 3,984,574, issued to Comollo, discloses an abhesive chewing gum base in which the non-tack properties were achieved by eliminating conventional chewing gum base ingredients which were found to contribute to chewing gum tackiness, and by substituting non-tacky ingredients in place of the conventional ingredients. Specifically, it was discovered that three classes of materials account for conventional chewing gum tackiness. These materials are elastomers, resins, and waxes.

Comollo eliminated natural and some synthetic elastomers from chewing gum base, and substituted in their place one or more non-tacky synthetic elastomers such as polyisobutylene, polyisoprene, isobutylene-isoprene copolymer and butadiene-styrene copolymer. Comollo also eliminated the tack-producing natural resins and modified natural resins and used instead relatively high amounts of hydrogenated or partially hydrogenated vegetable oils or animal fats. Finally, Comollo completely excluded waxes from the gum base, but included polyvinyl acetate, fatty acids, and mono and diglycerides of fatty acids. Comollo did not teach controlled release of sweeteners with his abhesive chewing gums.

In US-A-5023093, there is disclosed a chewing gum base with reduced calorie content. The central components of that gum base are 10-25% polyvinyl acetate having a medium molecular weight of about 35,000 to 55,000, 4.5% to about 10% acetylated monoglyceride.

In WO88/08672 we describe a chewing gum composition containing sucralose having a controlled and extended release of sweetness.

The present invention is directed to a wax-free chewing gum containing controlled release sweeteners. The chewing gum of the invention includes a wax-free chewing gum base comprising quantities of synthetic elastomer, elastomer plasticizer, filler and softener, and, like the gum base of Comollo, is substantially free of wax. However, the gum base of the invention is not limited to use in a non-tack chewing gum and may, therefore, contain optional quantities of natural elastomer and/or natural resins. The gum base of the invention may also contain optional quantities of minor ingredients such as color and antioxidant.

According to the present invention there is provided a chewing gum free of mineral hydrocarbon wax which also contains no more than 5% natural wax, having controlled sweetener release comprising from 5 to 35 wt% chewing gum base, which gum base is wax-free, comprising: from 20 to 60 wt% synthetic elastomer; from 0 to 30 wt% natural elastomer; from 5 to 55 wt % elastomer plasticizer; from 4 to 40 wt% filler; and from 5 to 40 wt% of at least one softener, at least one of which shall be hydrogenated or partialy hydrogenated vegetable oils or a mixture of hydrogenated and partialy hydrogenated vegetable oils; at least one flavoring agent and water-soluble bulking agent, and said chewing gum further comprising at least one controlled release sweetener ingredient.

The use of natural elastomers in the gum base compliments certain chewing gum flavors, such as mint oil, by rounding out the otherwise harsh or grassy notes in the flavor. The presence of natural elastomers and natural resins in the gum base also contributes to improved chewing gum texture and flavor retention. There is currently a need or desire in the chewing gum industry for gum bases which are devoid or substantially free of hydrocarbon-containing waxes and which contain desired quantities of natural elastomers, natural resins, or both.

When the wax-free gum bases are formulated with water-soluble ingredients, such as, for example, sweeteners, bulking agents, binders, and the like, and flavoring agents, it has been determined that the wax-free gum bases, when formulated into chewing gums, surprisingly produce chewing gums which tend to release certain flavoring ingredients at accelerated rates. Also, it's been observed that a greater overall quantity of flavor is released from wax-free gums. This results not only in a stronger initial flavor impact, but also in a stronger flavor in later stages of chewing. This is taught in U.S. Patent Application 07/997,732, filed December 30, 1992 (Case No. 1391/1282), which is incorporated herein by reference. To obtain a balanced release of flavor and sweeteners, which balance enhances the consumer's pleasure, it is now important in the wax-free chewing gums of this invention to formulate the wax-free chewing gum with not only the wax-free gum bases of the invention, but also to formulate the chewing gums using flavors and sweeteners which release essentially concurrently. This requires a controlled sweetener release that provides rapid release to compliment the more rapid release of flavors in wax-free chewing gums, but also provides controlled, and longer term sweetener release, concurrently with stronger flavor release in later stages of the chew, thereby providing consumer pleasure over the life of the chew.

With the foregoing in mind, it is a feature and advantage of the invention to provide a substantially wax-free chewing gum base.

It is also a feature and advantage of the invention to provide a suitably soft gum base in which wax is not needed to soften the gum base.

It is also a feature and advantage of the invention to provide improved chewing gums which contain the wax-free chewing gum base of the invention, which gums contain controlled release sweeteners.

It is also a feature and advantage of the invention to provide improved chewing gums made from said inventive wax-free gum base which does not retain the amount of flavor typical sugarless gums retain after chewing, and in fact releases flavoring ingredients at a rate greater than observed with a wax containing chewing gum, and to provide sweetener release at comparable rates to flavor release from these wax-free chewing gums, both initially and throughout the chew.

It is also a feature and advantage of the invention to provide chewing gum products having desirable properties such as flavor quality and strength, flavor and sweetness retention, sweetness and flavor release profiles which are comparable, or at least similar to one another, controlled rate of both flavor and sweetness release, controlled sweetness release at rates at least comparable to flavor release in the wax-free chewing gums of this invention, as well as breath freshening, dental and oral health properties and good shelf stability.

The foregoing and other features and advantages will become further apparent from the following detailed description of the presently preferred embodiments, when read in conjunction with the accompanying examples. It should be understood that the detailed description and examples are illustrative rather than limitative, the scope of the present invention being defined by the appended claims and equivalents thereof.

In accordance with the invention, a chewing gum base is provided for use in either non-tack or conventional chewing gum, which may be either bubble gum or regular chewing gum. The chewing gum base of the invention contains from 20 to 60 weight percent synthetic elastomer, from 0 to 30 weight percent natural elastomer, from 5 to 55 weight percent elastomer plasticizer, from 4 to 35 weight percent filler, from 5 to 40 weight percent softener, and optional minor amounts (about one percent or less) of miscellaneous ingredients such as colorants, antioxidants, etc.

Synthetic elastomers may include, but are not limited to, polyisobutylene with GPC molecular weight of from 10,000 to 95,000, isobutylene-isoprene copolymer (butyl elastomer), styrene-butadiene copolymers having styrene-butadiene ratios of from 1:3 to 3:1 polyvinyl acetate having GPC molecular weight of from 2,000 to 90,000, polyisoprene, polyethylene, vinyl acetate-vinyl laurate copolymer having vinyl laurate content of from 5 to 50 percent by weight of the copolymer, and combinations thereof. Preferred combinations include, but are not limited to polyisobutylene and styrene-butadiene, polyisobutylene and polyisoprene, polyisobutylene and isobutylene-isoprene copolymer (butyl rubber), polyisobutylene, styrene-butadiene copolymer, and isobutylene-isoprene copolymer, and all of the above in admixture with polyvinyl acetate, vinyl acetate-vinyl laurate copolymers and mixtures thereof.

Preferred ranges are, for polyisobutylene, 50,000 to 80,000 GPC molecular weight, for styrene-butadiene, 1:1 to 1:3 bound styrene-butadiene, for polyvinyl acetate, 10,000 to 65,000 GPC molecular weight with the higher molecular weight polyvinyl acetates typically used in bubble gum base, and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, chiquibul, crown gum, pendare, venezuelau chicle, leche de vaca, niger gutta, tunu, chilte and combinations thereof. The preferred natural elastomers are jelutong, chicle, sorva and massaranduba balata. The preferred elastomers and elastomer concentrations vary depending on whether the chewing gum in which the base is used is abhesive or conventional, bubble gum or regular gum, as discussed below.

Elastomer plasticizers may include, but are not limited to, natural rosin esters such as glycerol esters of partially hydrogenated rosin, glycerol esters of polymerized rosin, glycerol esters of partially dimerized rosin, glycerol esters of rosin, glycerol ester of tall oil rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; natural terpene resin; and any suitable combinations of the foregoing. The preferred elastomer plasticizers will also vary depending on the specific application, and on the type of elastomer which is used. For example, use of terpene resin to wholly or partially replace ester gums will cause the gum base to be less tacky.

The term "wax-free" as used herein refers to the exclusion of waxes which contain mineral hydrocarbons. Natural waxes such as carnauba wax, beeswax, rice bran wax, and candellila wax do not contain mineral hydrocarbons and are therefor acceptable for use in the chewing gum base and chewing gums prepared therefrom. However, our gum bases preferably contain from 0 to 5 weight percent natural wax, and most preferably are free of both mineral hydrocarbon waxes, i.e. petroleum waxes, and natural waxes.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), lanolin, diacetin, and combinations thereof. Hydrogenated vegetable oils are generally preferred, either alone or in combination with other softeners.

Colorants and whiteners may include FD&C-type dyes and lakes, fruit and vegetable extracts, titanium dioxide, cocoa powder and combinations thereof.

The wax-free gum base of the invention may also contain optional ingredients such as either natural or synthetic antioxidants.

When the wax-free gum base of the invention is to be used in a regular (non-bubble) gum which has at least some abhesive (reduced tack) characteristics, the base should contain from 10 to 40 weight percent synthetic elastomer, from 15 to 30 weight percent elastomer plasticizer, from 5 to 30 weight percent filler, from 15 to 35 weight percent softener, from 0 to 1 weight percent colorant and from 0 to 0.1 weight percent antioxidant.

Specific embodiments of the wax-free gum base are provided in Examples 1-30 below.

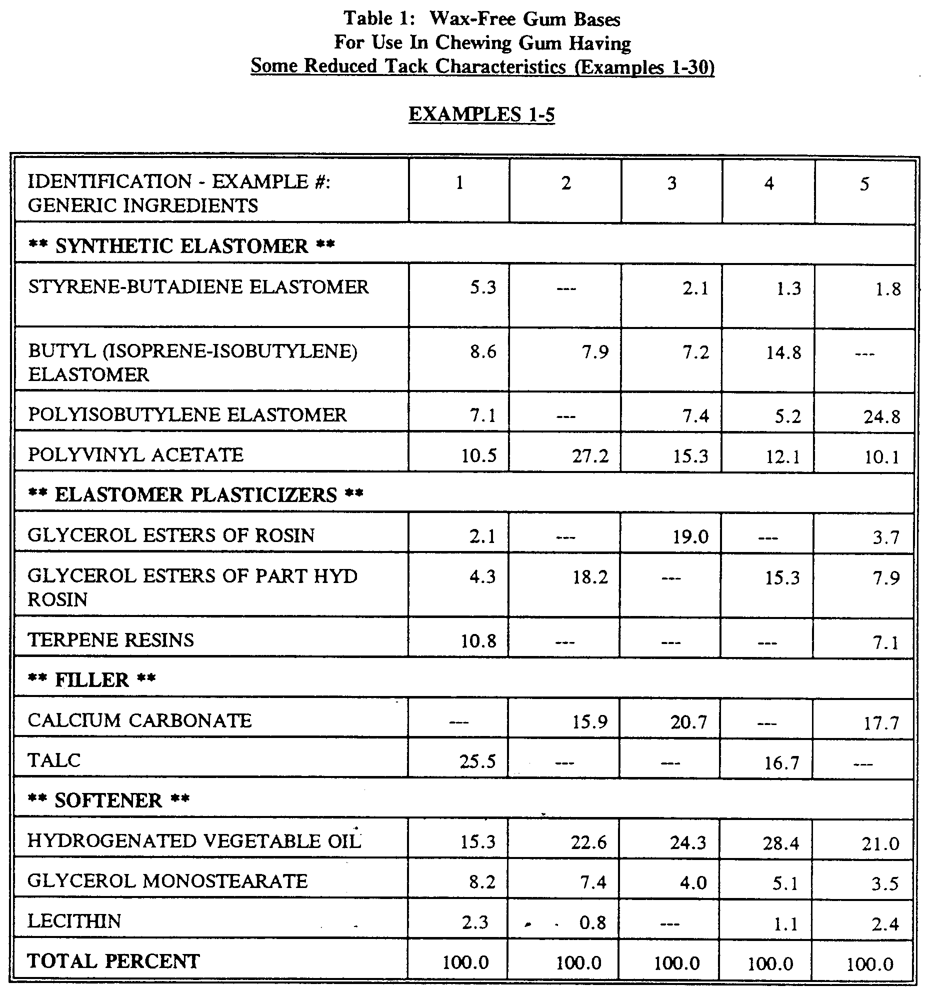

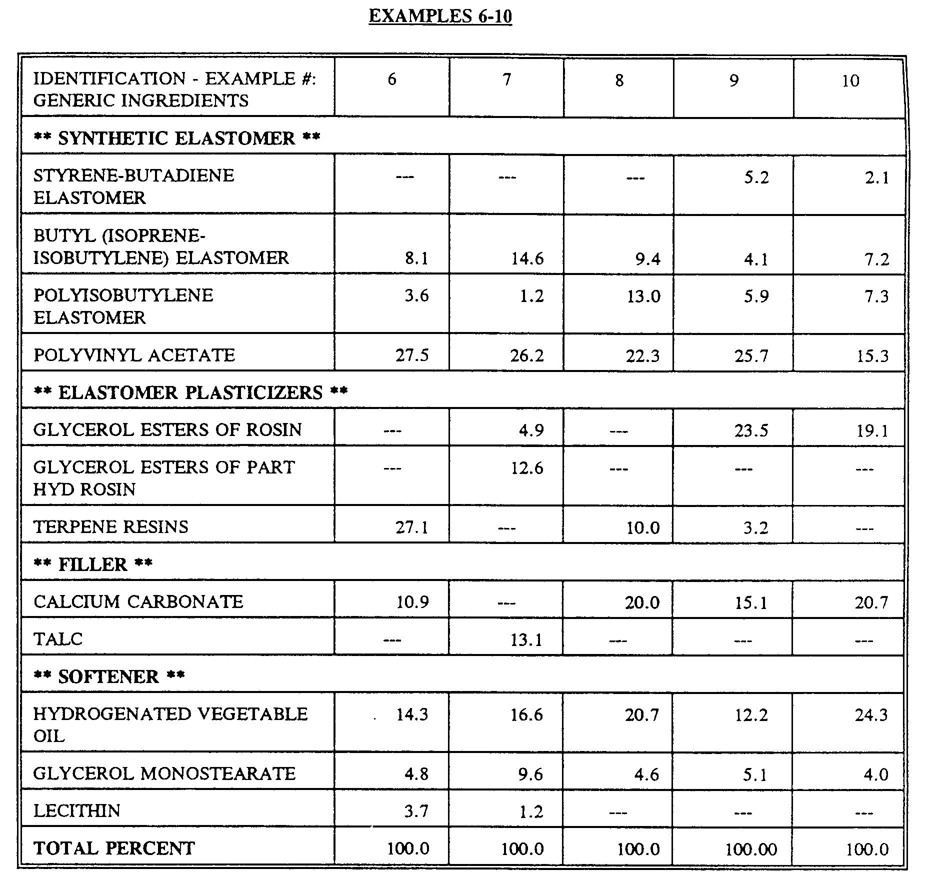

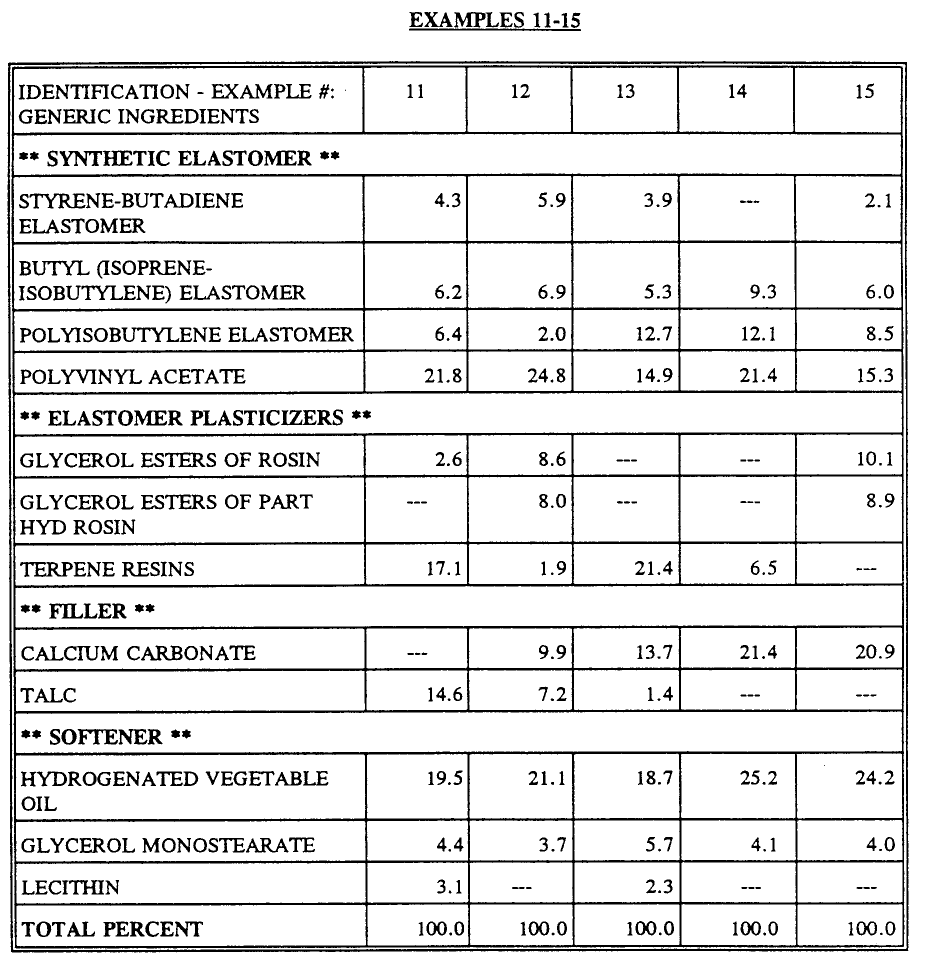

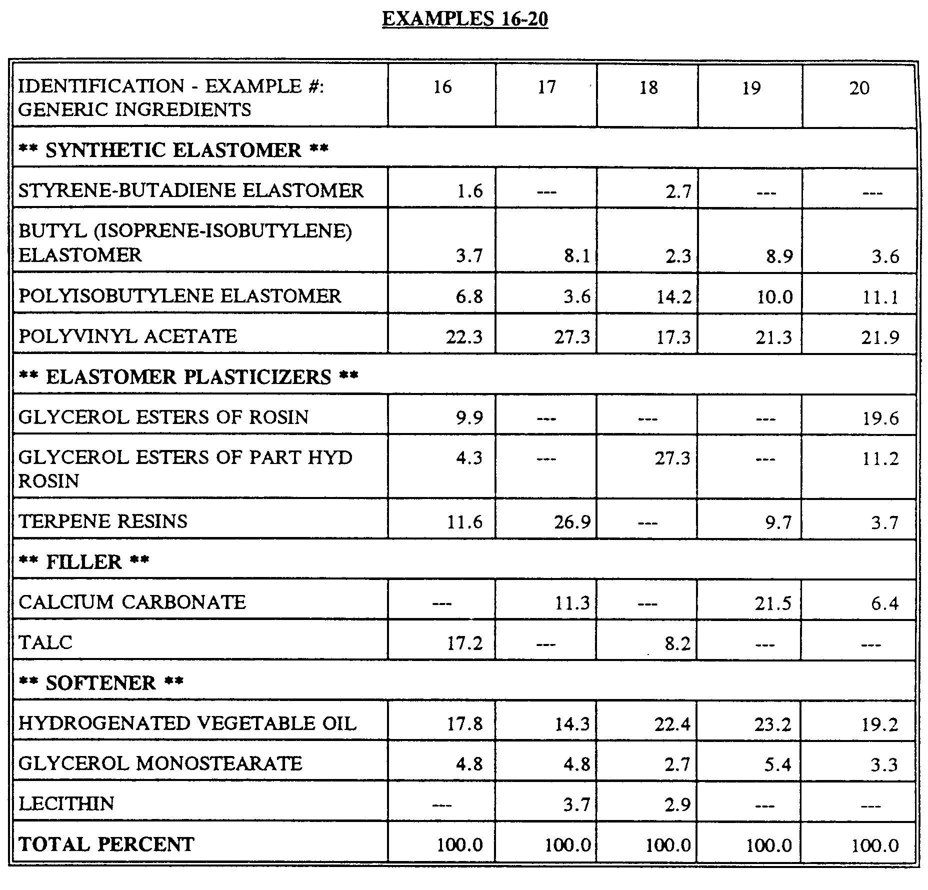

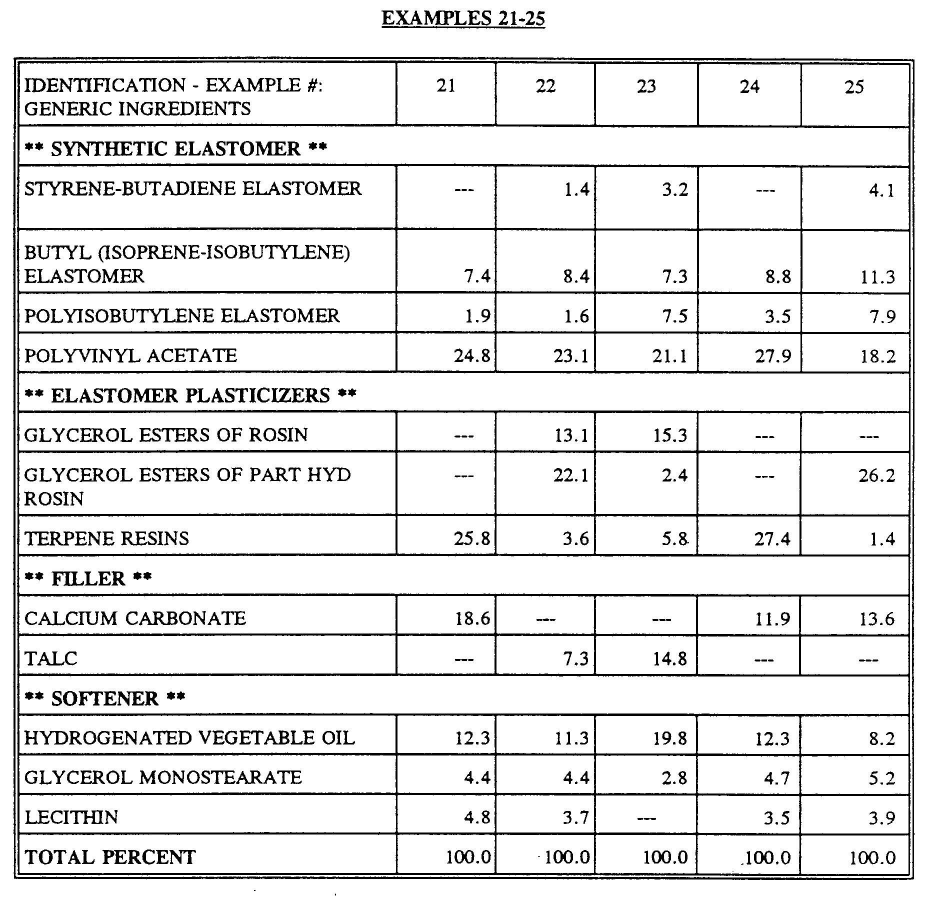

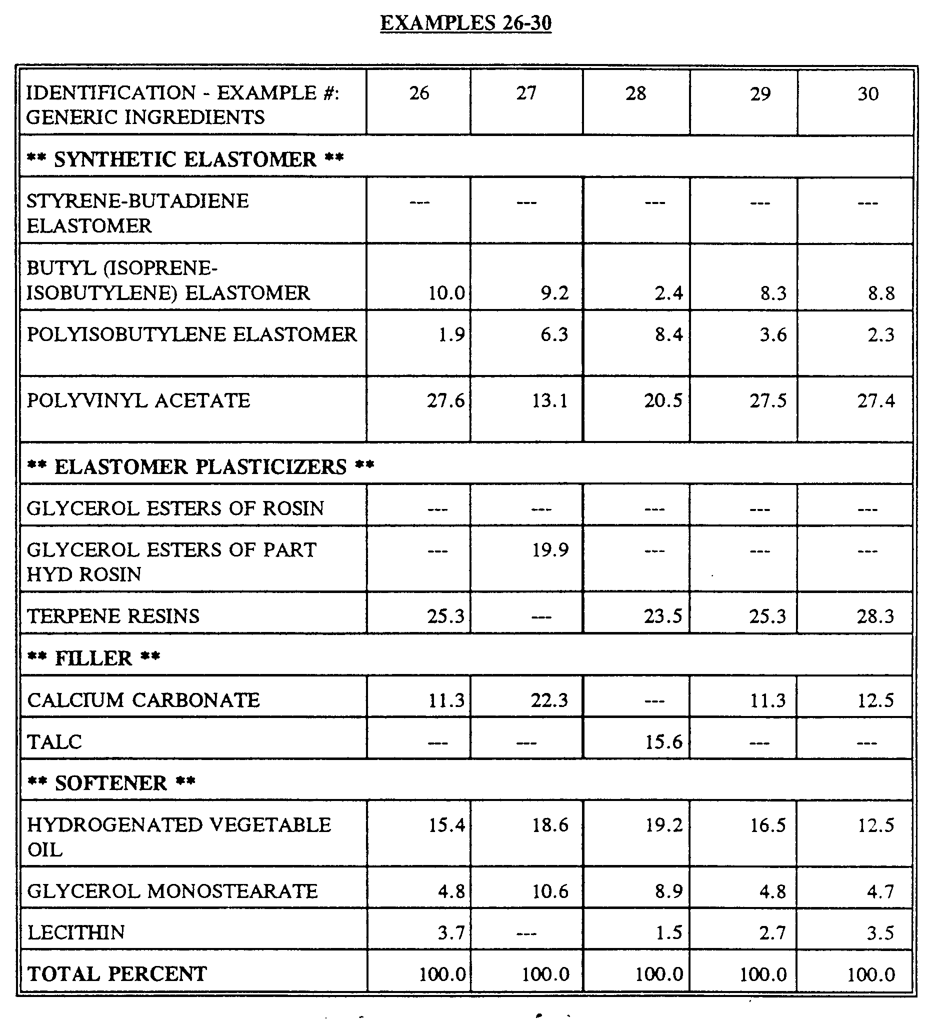

When the wax-free gum base of the invention is to be used in a regular (non-bubble) gum which does not have abhesive characteristics, the base should contain from 12 to 30 weight percent natural elastomer, from 20 to 40 weight percent synthetic elastomer, from 4 to 25 weight percent elastomer plasticizer, from 5 to 25 weight percent filler, from 15 to 30 weight percent softener, from 0 to 1 weight percent colorant and from 0 to 0.1 weight percent antioxidant. Specific embodiments of the wax-free gum base fitting this description are provided in Examples 31-55 below:

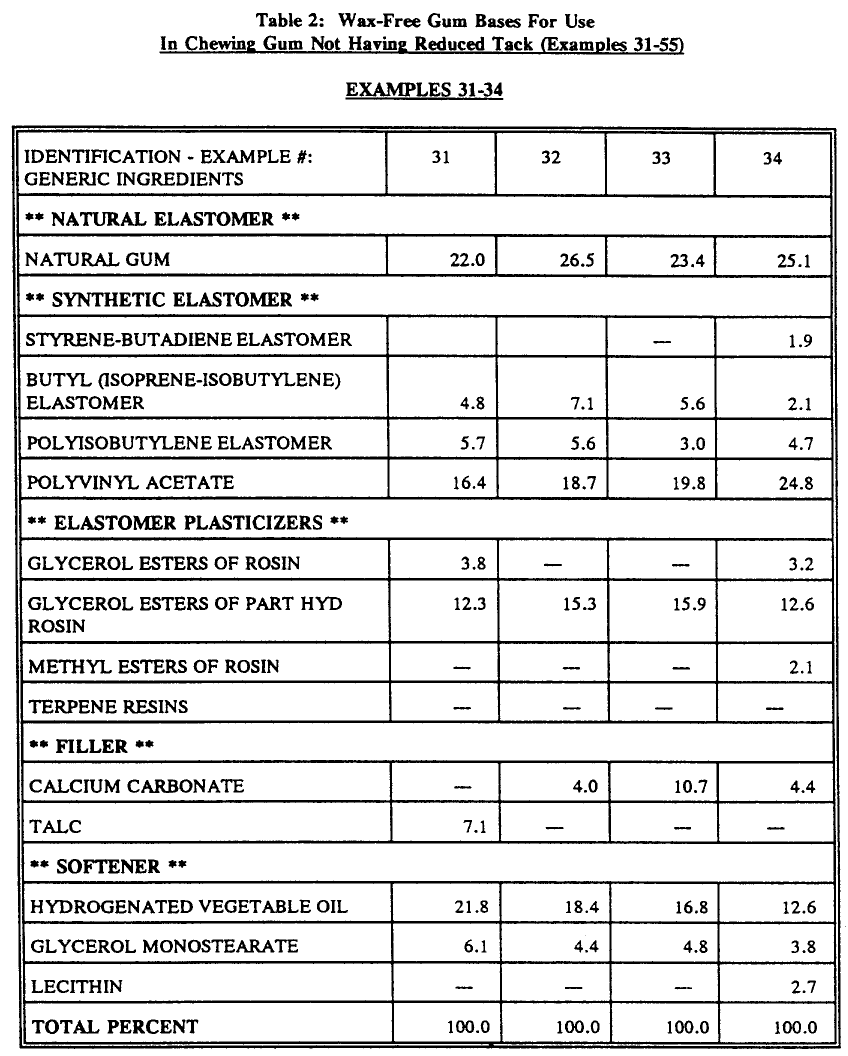

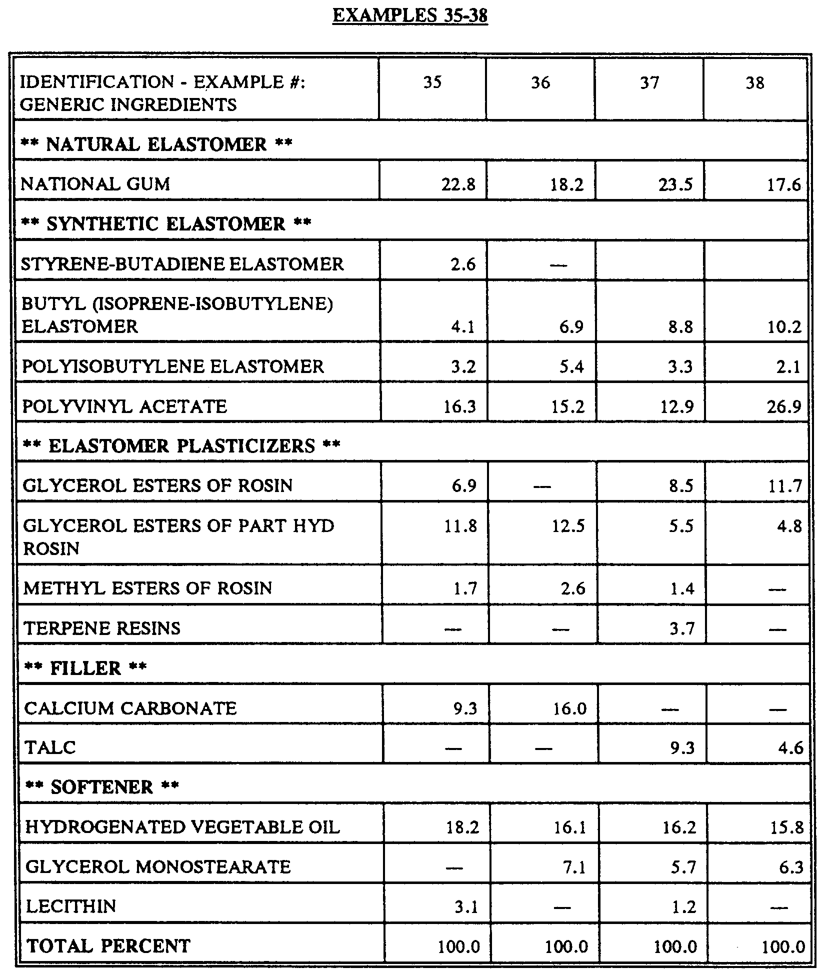

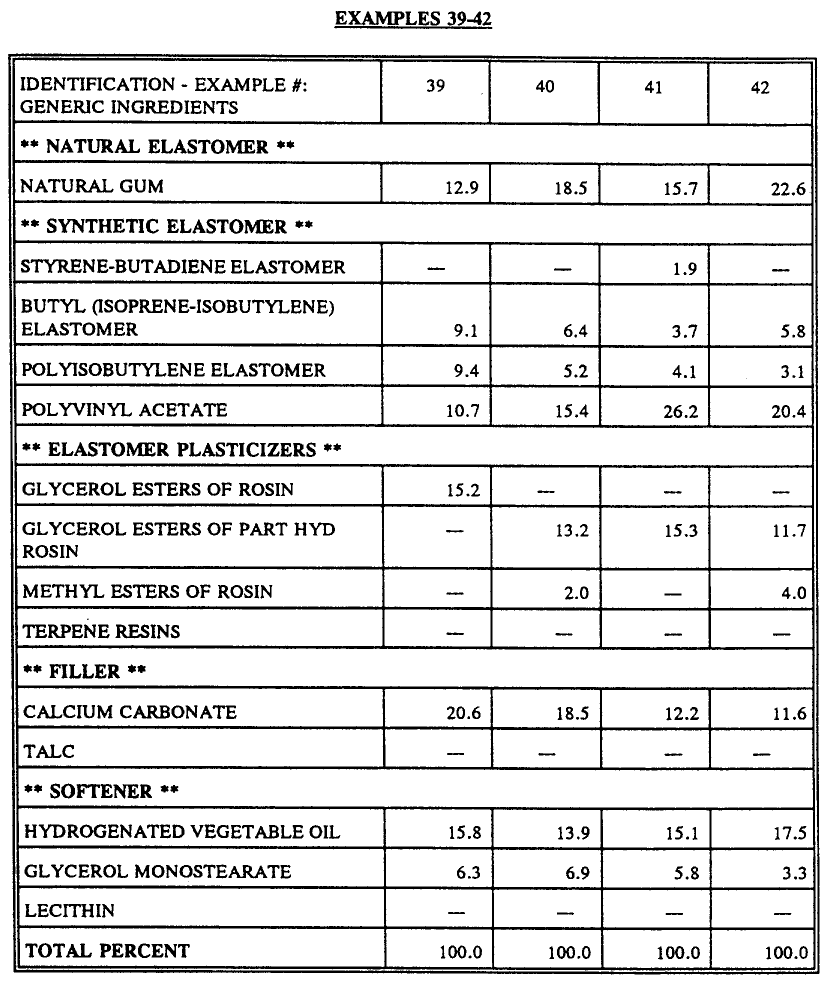

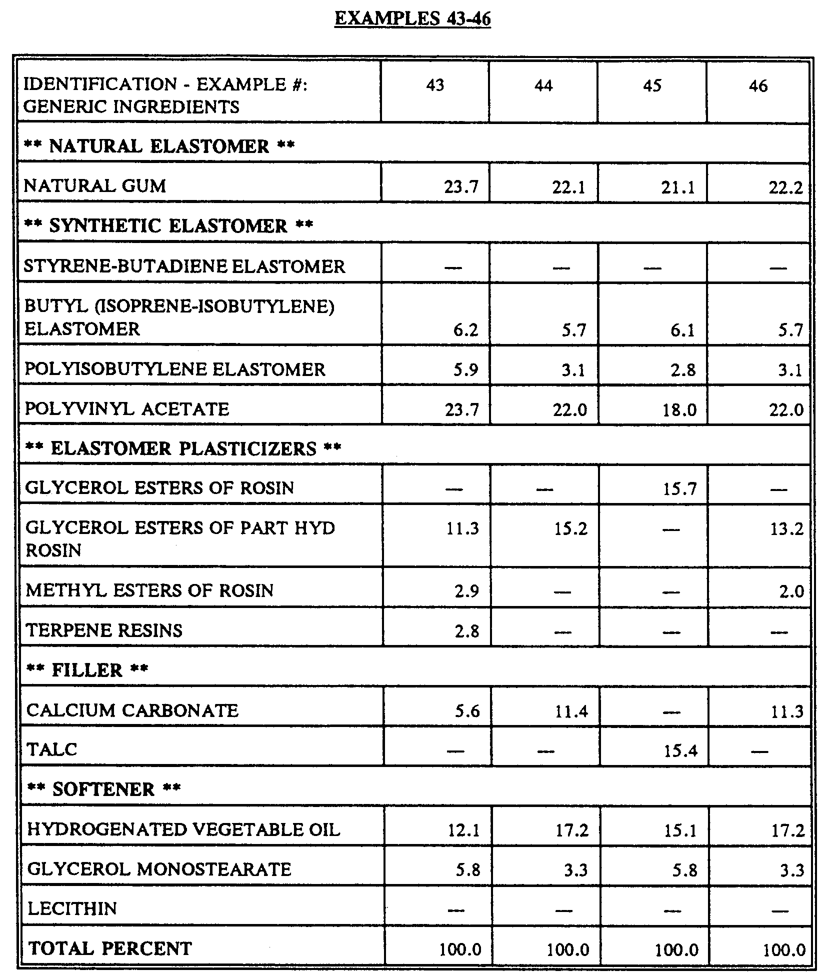

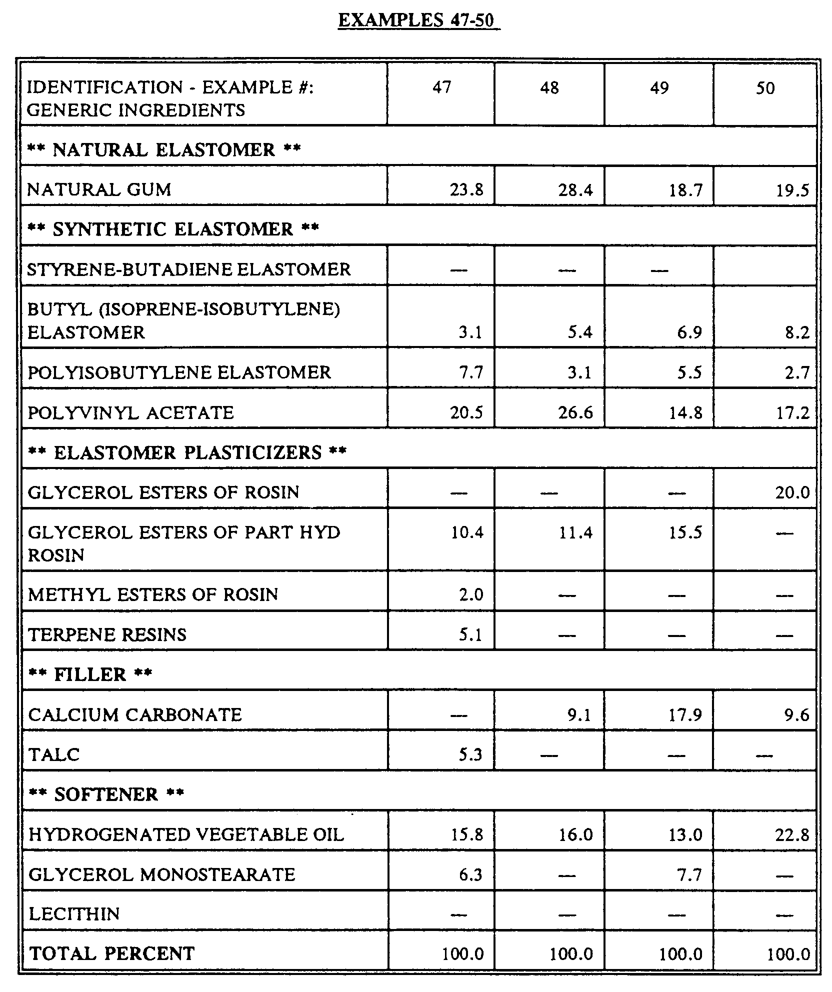

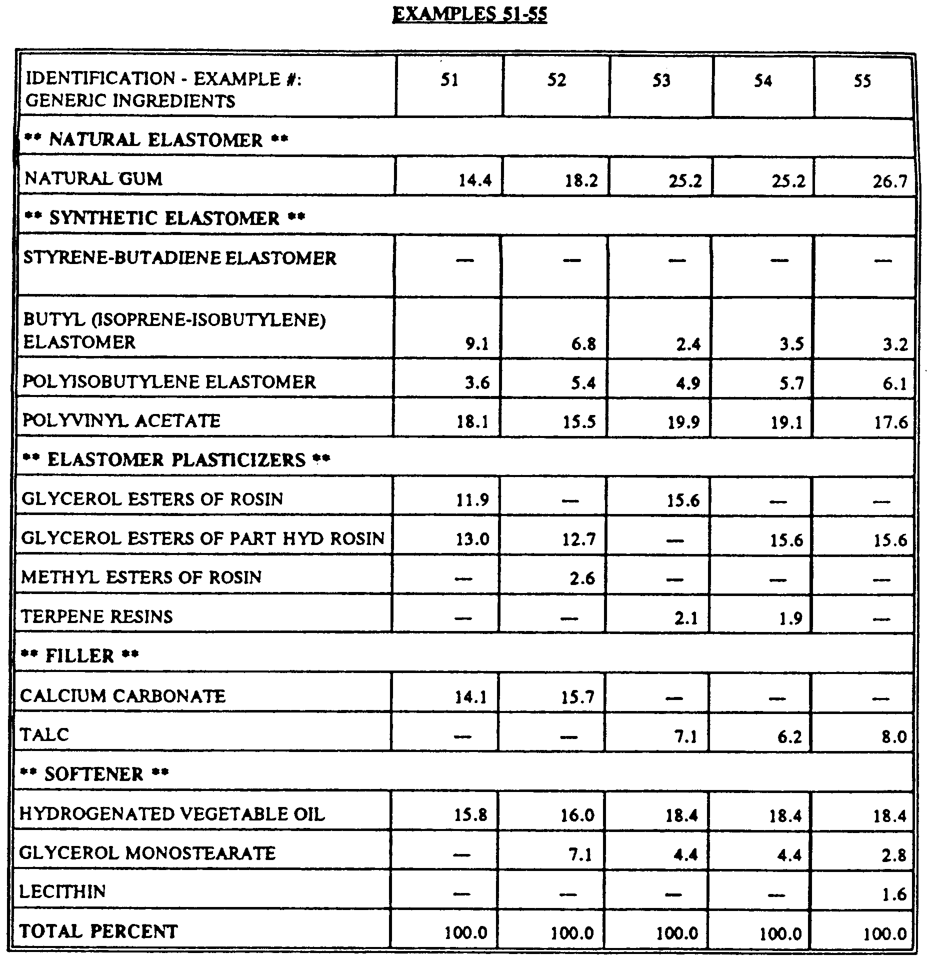

When the wax-free gum base of the invention is to be used in a bubble gum, the base should contain from 30 to 60 weight percent synthetic elastomer, from 5 to 55 weight percent elastomer plasticizer, from 10 to 35 weight percent filler, from 5 to 25 weight percent softener, 0 to about 1 weight percent colorant and from 0 to 0.1 weight percent antioxidant. Specific embodiments of the wax-free base for use in bubble gum are provided in Examples 56-74 below.

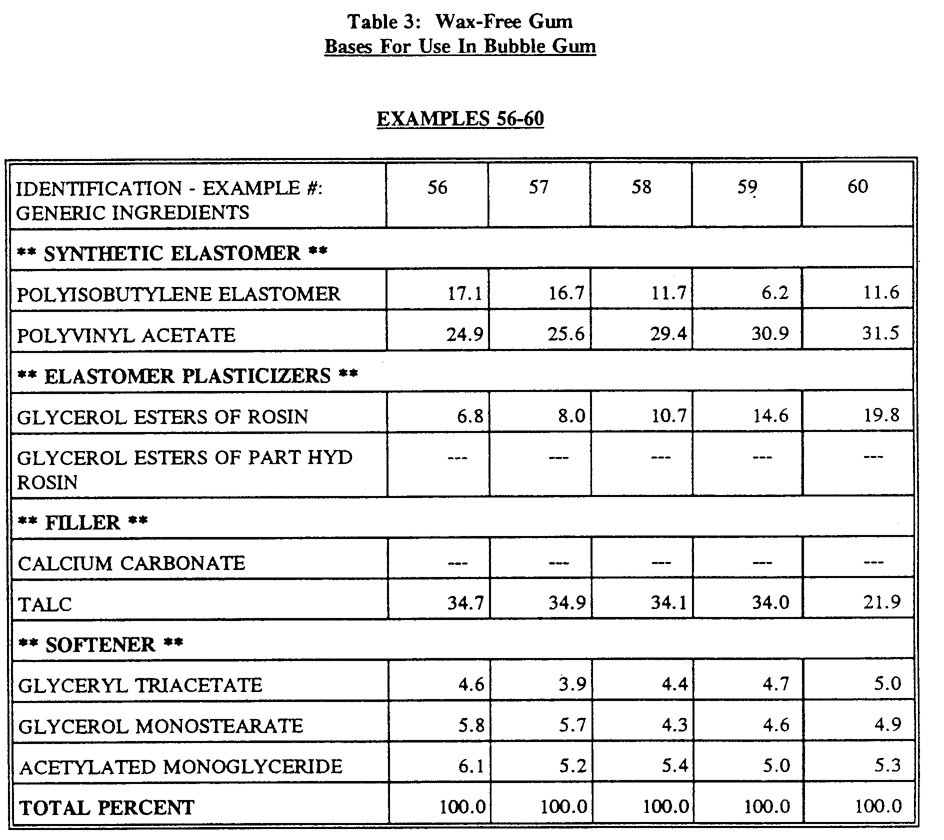

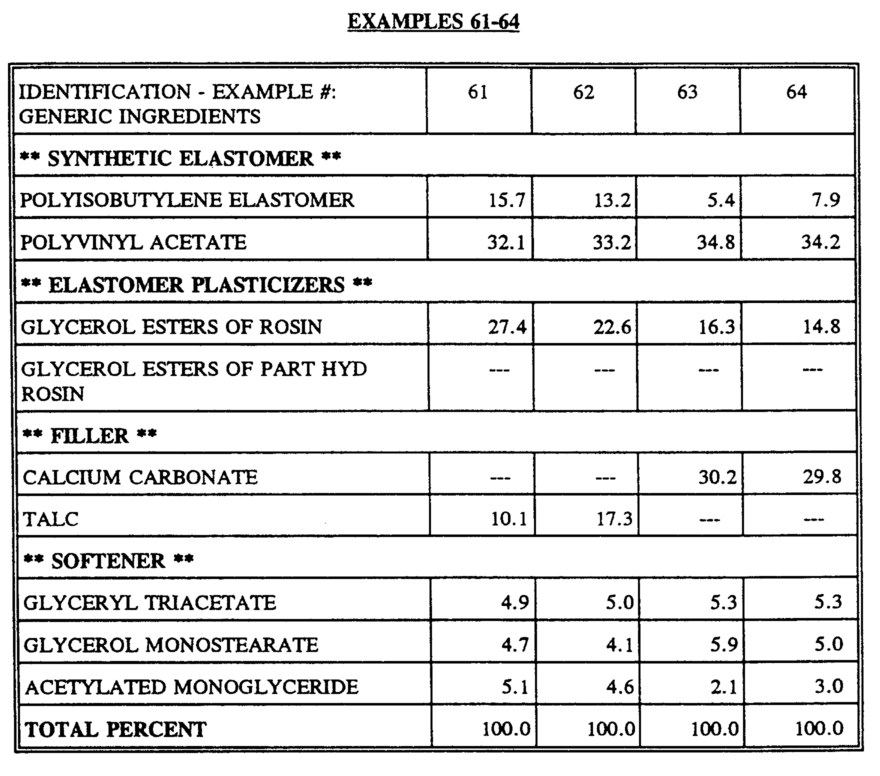

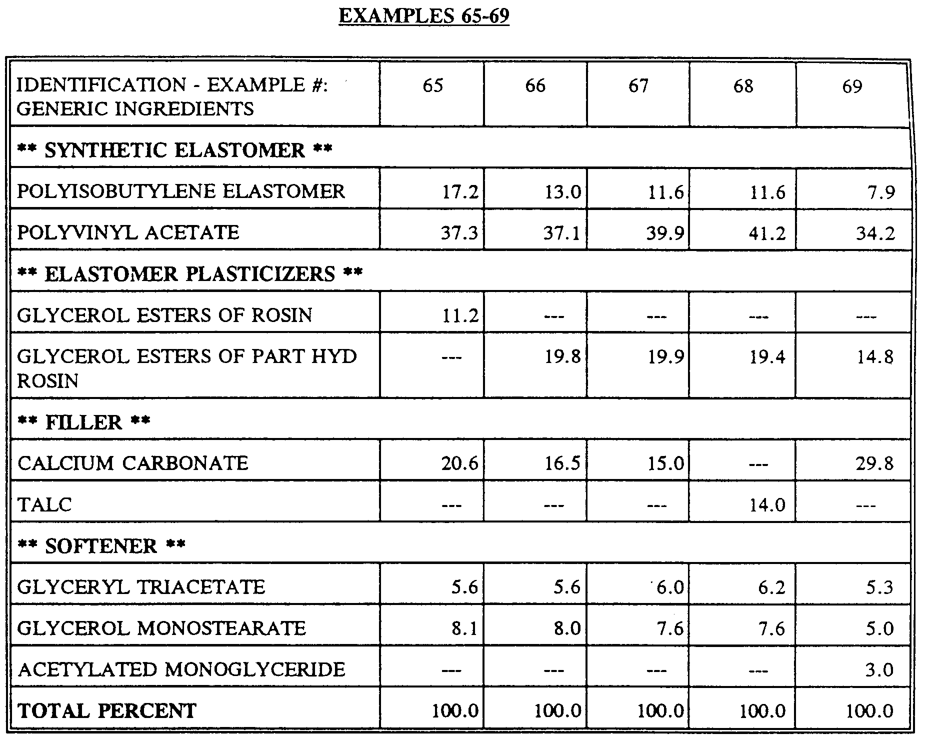

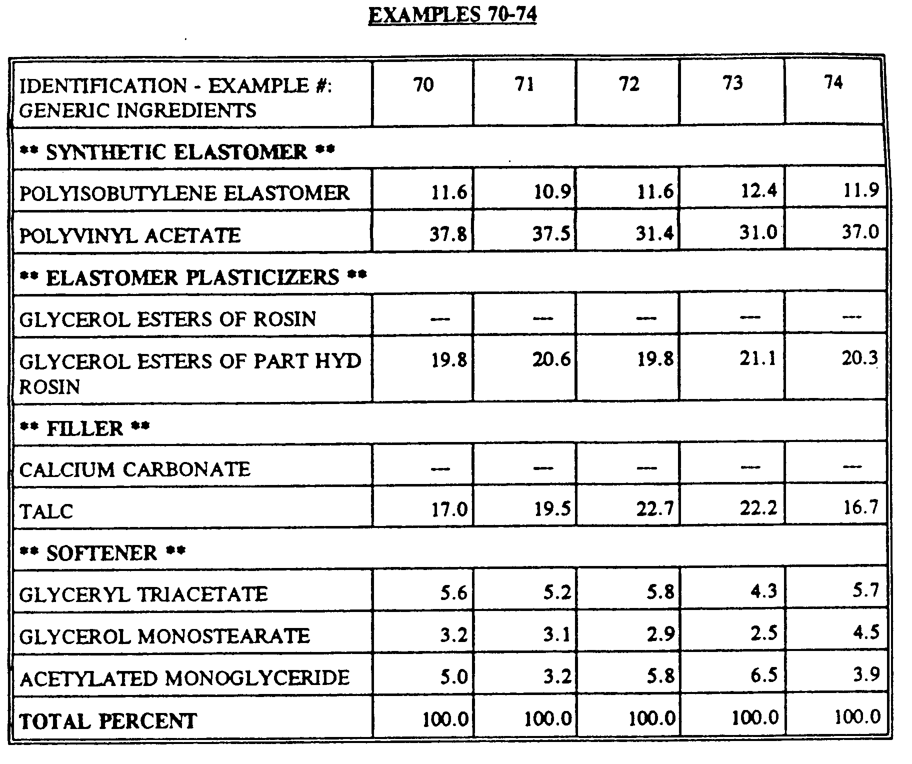

The wax-free gum base of the invention constitutes from 5 to 35 weight percent of the chewing gum. The gum base is typically prepared by adding an amount of the elastomer, elastomer plasticizers and filler to a heated sigma blade mixer with a front to rear blade speed ratio of typically 2:1. The initial amounts of ingredients are determined by the working capacity of the mixing kettle in order to attain a proper consistency. After the initial ingredients have massed homogeneously, the balance of the elastomer plasticizer, filler, softeners, etc. are added in a sequential manner until a completely homogeneous molten mass is attained. This can usually be achieved in one to four hours, depending on the formulation. The final mass temperature can be between 60°C and 150°C, more preferably between 80°C and 120°C. The completed molten mass is emptied from the mixing kettle into coated or lined pans, extruded or cast into any desirable shape and allowed to cool and solidify.

Although the above method for making base is typical and applies to both chewing and bubble bases, it has been found that there is a preferred method for making the bubble bases described in this invention.

First, all of the polyvinyl acetate and portions of the polyisobutylene and filler are added and blended in a heated sigma blade mixer. Softeners such as glyceryl triacetate and/or acetylated monoglyceride are then added along with a second portion of each of polyisobutylene and filler. The acetylated monoglyceride may be added at the end of the process if desired and still not alter the chewing texture of the gum made from the base.

Next, the rest of the polyisobutylene and filler are added along with the elastomer plasticizer. Finally, the remaining ingredients such as glycerol monostearate and antioxidants may be added. Colorant may be added at any time during the mixing process and is preferably added at the start.

There are some variations to the above described preferred method which in no way limits the method as described. Those skilled in the art of gum base manufacture, may be able to appreciate any minor variations.

In producing wax-containing gum bases high in polyvinyl acetate, and particularly those high in high molecular weight polyvinyl acetate, it is necessary to improve blending of the ingredients by removing the heat applied to the sigma blade mixer at some point in the process. This reduces the temperature of the gum base and causes greater compatibility of its ingredients. In the inventive gum base process for making the inventive gum base free of wax, there is no need to remove the heat applied. The degree of incompatibility is greatly reduced since there is no wax present. Nevertheless, heat is preferably removed at from 30 minutes to 90 minutes into the mixing time of the base production process.

In addition to the water-insoluble gum base, a typical chewing gum composition includes a water-soluble bulking agent and one or more flavoring agents. The wax-free gum base of the invention can be used in any typical chewing gum composition.

The water-soluble bulking agent of the chewing gum may include softeners, bulk sweeteners, high-intensity sweeteners, flavoring agents and combinations thereof. Softeners are added to the chewing gum in order to optimize the chewability and mouth feel of the gum. The softeners, which are also known as plasticizers or plasticizing agents, generally constitute from 0.5 to 15% by weight of the chewing gum. The softeners may include glycerin, lecithin, glycerol monostearate, glycerol triacetate, hydroxylated lecithin, agar, carrageenan, and combinations thereof. Aqueous sweetener solutions, syrups, and the like, such as those containing sorbitol, hydrogenated starch hydrolyzates, corn syrup and combinations thereof, may also be used as softeners and binding agents in the wax-free chewing gums of this invention.

Bulk sweeteners may constitute between 5-95% by weight of the chewing gum, more typically 20 to 80% by weight of the chewing gum and most commonly 30 to 60% by weight of the chewing gum. Bulk sweeteners may include both sugar and sugarless sweeteners and components. Sugar sweeteners may include saccharide containing components including but not limited to sucrose, dextrose, maltose, dextrin, dried invert sugar, fructose, levulose, galactose, corn syrup solids, high maltose syrup, invert/high fructose syrup, maltotriose, glyceraldehyde, erythrose, xylose, lactose, leucrose, L-sugars, fructooligosaccharide and low calorie bulking/binding agents such as indigestible dextrin, guar gum hydrolyzate, oligofructose, polydextrose, and the like, alone or in combination. Sugarless sweeteners include components with sweetening characteristics but are devoid of the commonly known sugars. Sugarless sweeteners include but are not limited to sugar alcohols such as sorbitol, mannitol, xylitol, hydrogenated starch hydrolyzates, maltitol, lactitol, erythritol, cellobiitol, and the like, alone or in combination.

High-intensity sweeteners may also be present and are commonly used with sugarless sweeteners. When used, high-intensity sweeteners typically constitute between .001 to 5% by weight of the chewing gum, preferably between .01 to 1% by weight of the chewing gum. Typically, high-intensity sweeteners are at least 20 times sweeter than sucrose. These may include but are not limited to sucralose, aspartame, salts of acesulfame, alitame, saccharin and its salts, cyclamic acid and its salts, glycyrrhizin, dihydrochalcones, thaumatin, monellin, stevia and the like, alone or in combination.

In this invention, it is advantageous to use at least one controlled release sweetener with other optional active sweetening and bulking ingredients. The controlled release sweetener can be incorporated into the wax-free chewing gum after being modified, such as by encapsulating the sweetener, in order to modify its release. The most common ways of modifying the release of the active sweetening ingredients include spray drying, spray chilling, fluid-bed coating, coacervation, absorption, extrusion encapsulation, and other standard encapsulating techniques. The active sweetener ingredient may be modified in a multiple step process comprising any of the processes noted. Encapsulating agents that can be used include polyvinyl acetate, acrylic polymers and copolymers, carboxyvinyl polymer, polyamides, polystyrene, polyvinyl pyrrolidone, natural waxes, zein, shellac, agar, alginates, a wide range of cellulose derivatives including ethyl cellulose, methyl cellulose, sodium hydroxymethyl cellulose, and hydroxypropylmethyl cellulose and sodium carboxy methyl cellulose, dextrin, gelatin, modified starches, maltodextrin, gum arabic, xanthan gum, gelatin and pectin.

Controlled release of sweeteners is then obtained by selecting sweeteners that are, by their nature, fast release sweeteners and those which are, by their nature, slow release sweeteners, and blending them with the wax-free gum bases of the invention to obtain the wax-free chewing gum of this invention having both fast flavor release to compliment normally faster flavor release from wax-free chewing gums, and controlled sweetness (slower) release to sustain consumer pleasure during the chew. The blend is accomplished so as to provide controlled total sweetener release in a way so as to give an available sweetener profile comparable to, or similar to, the flavor profile available to the consumer. This perception of available flavor and sweetener profile provides enhanced consumer pleasure not only during the initial sweetener and flavor release, but throughout the chew.

Similarly, a sweetener which is normally a fast release sweetener may be modified to become a slow release sweetener, or a normally slow release sweetener may be modified to become a fast release sweetener. These may then be used in those combinations which provide effective sweetness release for the wax-free sweeteners of this invention.

Combinations of sugar and/or sugarless sweeteners may be used in the wax-free chewing gum. The sweetener may also function in the chewing gum in whole or in part as a water-soluble bulking agent. Additionally, the softener may also provide additional sweetness such as with aqueous sugar or alditol solutions.

Fast release sweeteners contemplated include such low-intensity sweeteners as sucrose, dried invert sugar, fructose, xylitol, and combinations thereof. Fast release sweeteners also include most high-intensity sweeteners, for example, those sweeteners selected from aspartame, acesulfame K, alitame, saccharin, cyclamate, used either alone, or in combination. However, these high-intensity sweeteners may be modified, as will be seen later, to become controlled release (or slow release) sweeteners.

Fast release sweeteners, as contemplated above, release about 60% of their sweetness, or more, in the first five (5) minutes of chewing. Further, the fast release sweeteners normally have a sweetness intensity at least about equal to, or greater than, that provided by sucrose. Therefore, these sweeteners provide a relatively high impact of sweetness during the first three (3) minutes of chewing.

Fast release sweeteners may be found as natural sweeteners or they may be synthesized sweeteners. They may be treated or modified to provide for rapid or fast sweetness release. For example, sucralose, normally a slow release sweetener, when spray dried with maltodextrin gives a fast release sweetener.

Sweeteners which do not meet the requirements set forth above for fast release sweeteners are referred to herein as slow release sweeteners. The slow release sweeteners may be natural or synthetic. They may be low sweetness, or high sweetness ingredients. They may be fast release sweeteners formulated, reacted or modified in such a way as to become slow release sweeteners.

Such slow release sweeteners include, but are not necessarily limited to, sorbitol, mannitol, dextrose, maltose, corn syrup solids, galactose, dextrin, hydrogenated starch hydrolyzates, maltitol, isomaltitol and the high-intensity sweeteners sucralose, thaumatin, hydrochalcone and monellin. The slow release, or controlled release sweeteners may also include the encapsulated, agglomerated, or absorbed sweeteners, including, for example, encapsulated high intensity, normally fast release sweeteners.

For example, Yatka, in International Application No. PCT/US90/06038 (International Publ. No. WO 91/03147) taught a method of controlling release of stevioside in chewing gum. Stevioside, normally a fast release sweetener, was converted into a controlled release (or slow release) sweetener by coating, encapsulating, agglomerating, entrapping by absorption, or treating by multiple steps of encapsulating, agglomerating, and absorption. Ingredients such as the encapsulating agents mentioned above may be used.

Yatka, in International Application No. PCT/US88/04400 (International Publ. No. WO 89/03170) also teaches similar methods of controlling release of Acesulfame K in chewing gums. Also, in International Application No. PCT/US89/01269 (International Publ. No. WO 90/06061), Yatka demonstrates controlled release of Alitame in chewing gum.

Similar controlled release sweeteners including sucralose; Yatka, International Application No. PCT/US89/05296 (International Publ. No. WO 90/07859), Glycyrrhizin; Yatka, International Application No. PCT/US90/02255 (International Publ. No. WO 90/07864); and Dihydrochalcones; Yatka, International Application No. PCT/US90/04002 (International Publ. No. 90/13994) have been taught.

In addition to the above International Patent Applications/Publications, all of which are incorporated herein by reference, the following U.S. patents have taught various techniques of providing for either slowed release of sweeteners from, or in some cases, modified flavor release from, as providing for improved shelf life of, chewing gums or other digestible or consumable products:
U.S. Patent No. 4,139,639, Bahosky et al.
U.S. Patent No. 4,230,687, Sair et al.
U.S. Patent No. 4,384,004, Cea et al.
U.S. Patent No. 4,386,106, Merritt et al.
U.S. Patent No. 4,515,769, Merritt et al.
U.S. Patent No. 4,597,970, Sharma et al.
U.S. Patent No. 4,634,593, Stroz et al.
U.S. Patent No. 4,986,991, Yatka et al.
U.S. Patent No. 5,039,530, Yatka et al.
U.S. Patent No. 5,041,294, Patel et al.
U.S. Patent No. 5,100,678, Reed et al.

As those familiar with the art will recognize, either or both fast release and slow release sweeteners may serve as bulking agents or binders in chewing gum formulations, and the same is true for our wax-free chewing gums. The wax-free chewing gums do, however, preferably contain additional binding agents, since binding is one of the functions served by wax, when present in chewing gums.

Flavoring agents should generally be present in the chewing gum in an amount within the range of from 0.1 to 15% by weight of the chewing gum, preferably from 0.2 to 5% by weight of the chewing gum, most preferably from 0.5 to 3% by weight of the chewing gum. Flavoring agents may include essential oils, synthetic flavors or mixtures thereof including but not limited to oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

Optional ingredients such as colors, food acidulants, emulsifiers, pharmaceutical agents, vitamins, and additional flavoring agents may also be included in chewing gum.

Chewing gum is generally manufactured by sequentially adding the various chewing gum ingredients to any commercially available mixer known in the art. After the ingredients have been thoroughly mixed, the gum mass is discharged from the mixer and shaped into the desired form such as by rolling into sheets and cutting into sticks, extruding into chunks, or casting into pellets. Generally, the ingredients are mixed by first melting the gum base and adding it to the running mixer. The gum base may alternatively be melted in the mixer. Color and emulsifiers can be added at this time.

A softener such as glycerin can be added next along with syrup and part of the bulk portion. Further parts of the bulk portion may then be added to the mixer. Flavoring agents are typically added with the final part of the bulk portion. The entire mixing process typically takes from five to fifteen minutes, although longer mixing times are sometimes required. Those skilled in the art will recognize that variations of this mixing procedure, or other mixing procedures, may be followed.

The following formulas are illustrative of types of products which may be produced. All ingredient levels are expressed in weight percent.

Examples 75-93 illustrate non-tack and reduced-tack chewing gums of the present invention. As can be seen, there is much latitude in the selection of flavors, sweeteners and ingredient levels.

Examples 75-80 illustrate use of the invention with sugar gums while Examples 81-91 describe sugarless gums. Preferably, the chewing gums manufactured according to the invention will have a combination of slow release and fast release sweeteners, which combination provides for comparable, or similar sweetness release profiles when measured with flavor release profiles. Most preferably, the combination is created such that the perceived rate of sweetness release is similar to the perceived rate of flavor release. Sweetener release profile is a measure of the sensory perception of sweetener intensity released per unit time. Flavor release profile is similarly defined.

Encapsulated sweeteners may be used to extend sweetness and flavor and to protect the sensitive sweeteners from degradation during storage. Certain naturally slow release sweeteners, such as sucralose, may be encapsulated or codissolved and spray-dried to provide fast release, if the powdered or crystalline sweetener would normally provide for slow release. Low moisture products having moisture levels below 2% are also within the scope of these inventions, for example in Examples 83 and 85 which follow.

**Table 4**

| Sugar-Containing Non-Tack And Reduced Tack Gums EXAMPLES 75-80 | | | | | | |
|---|---|---|---|---|---|---|
| Example | 75 | 76 | 77 | 78 | 79 | 80 |
| Base Example # | 19 | 17 | 11 | 19 | 16 | 16 |
| Base % | 20.12 | 23.20 | 27.20 | 21.22 | 22.10 | 24.00 |
| Flavor | 0.20 (Spray Dried Peppermint) | 1.10 (Cinnamon) | 1.55 (Wintergreen) | 0.10 (Spray Dried Menthol) | 0.10 (Peppermint) | 0.90 (Peppermint) |
| Flavor | 0.91 (Spearmint) | --- | 0.10 (Spray Dried Menthol) | 0.85 (Spearmint) | 0.90 (Spearmint) | 0.10 (Spearmint) |
| Sugar | 58.70 | 60.96 | 55.60 | 60.60 | 60.34 | 61.19 |
| Sorbitol | 1.20 | 0.68 | --- | 0.68 | 0.70 | --- |
| Encapsulated Acesulfame K | 0.10 | 0.30 | --- | 0.30 | 0.41 | --- |
| Encapsulated Aspartame | 0.10 | --- | 0.2 | --- | --- | 0.1 |
| Calcium Carbonate | 3.10 | --- | --- | --- | --- | --- |
| Corn Syrup | 13.47 | 12.11 | 13.71 | 14.80 | 14.00 | 12.10 |
| Lecithin | --- | 0.15 | 0.10 | 0.15 | 0.15 | 0.20 |
| Glycerin | 2.10 | 1.50 | 1.54 | 1.30 | 1.30 | 1.41 |
| TOTAL | 100 | 100 | 100 | 100 | 100 | 100 |

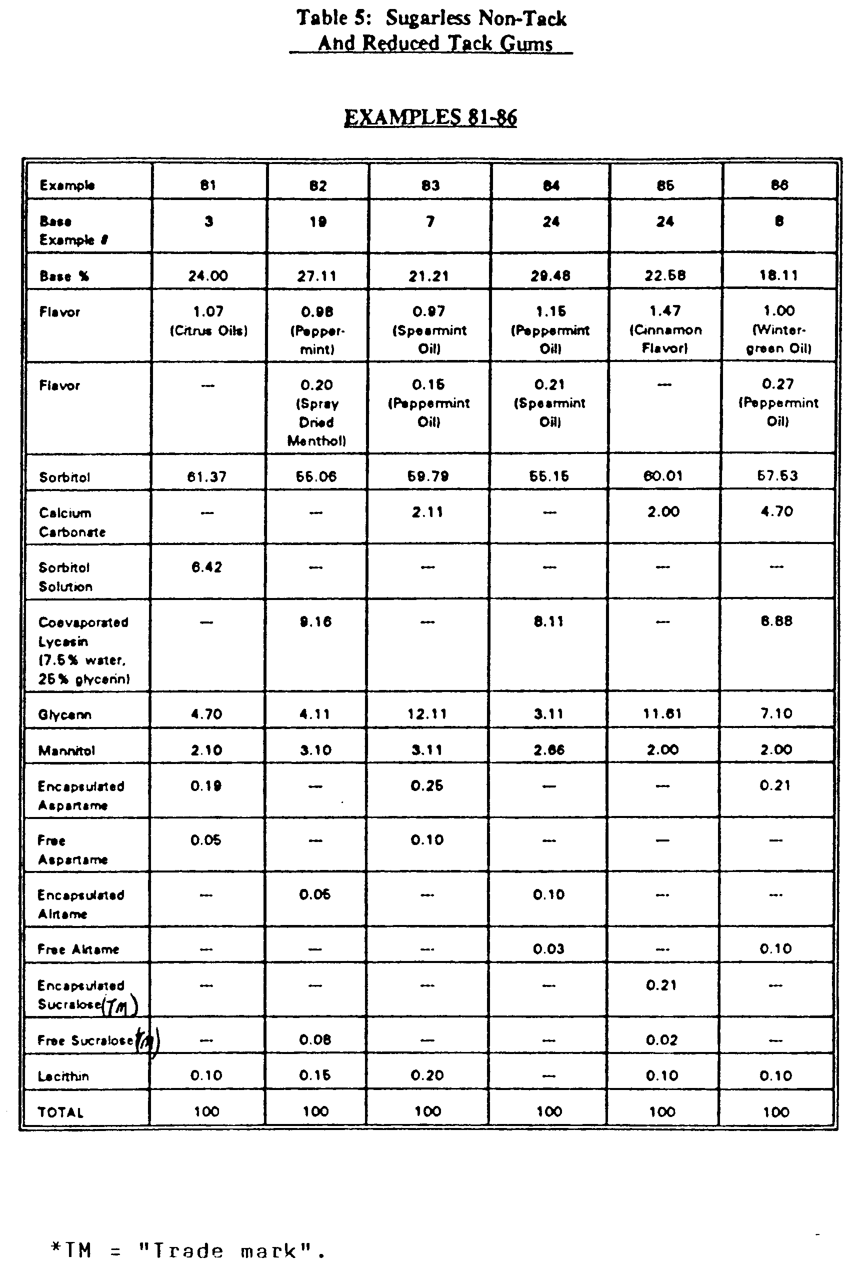

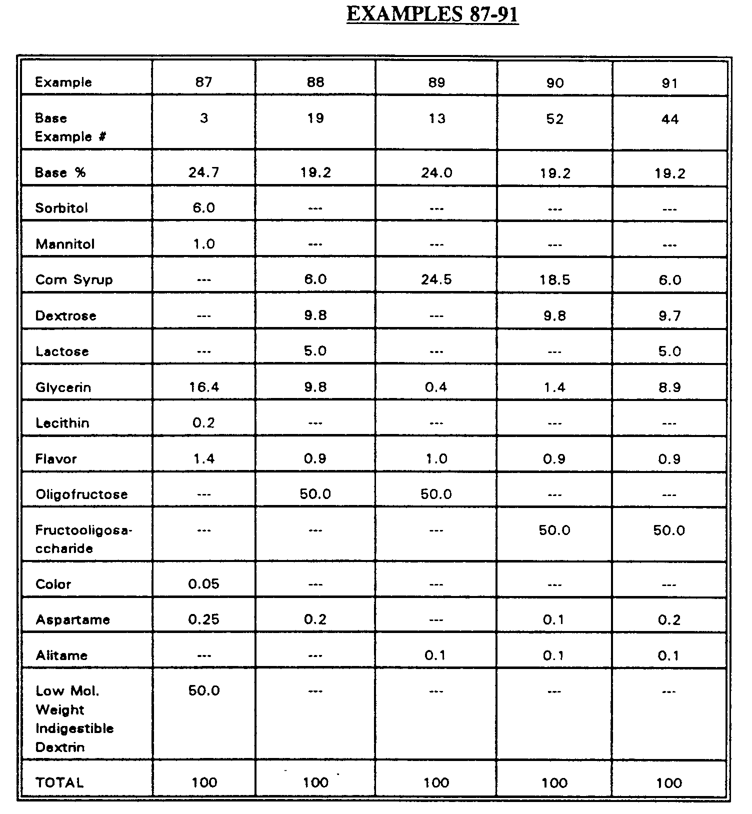

Examples 92-97 are sugarless products made with the non-reduced-tack bases of the present invention. Examples 98-103 are equivalent sugar products.

**Table 6**

| Regular Tack Sugarless Gums **EXAMPLES 92-97** | | | | | | |
|---|---|---|---|---|---|---|
| Example | 92 | 93 | 94 | 95 | 96 | 97 |
| Base Example # | 32 | 44 | 51 | 36 | 52 | 44 |
| Base % | 21.76 | 22.07 | 24.00 | 20.97 | 26.00 | 20.08 |
| Flavor | 0.92 (Peppermint Oil) | 0.77 (Spearmint Oil) | 0.83 (Spearmint Oil) | 0.99 (Cinnamon Flavor) | 0.97 (Peppermint Oil) | 1.04 (Peppermint Oil) |
| Flavor | --- | 0.24 (Peppermint Oil) | --- | --- | --- | 0.16 (Spray Dried Menthol) |
| Sorbitol | 46.44 | --- | --- | 63.61 | 51.40 | --- |
| Coevaporated Lycasin (7.5% Water, 25% Glycerin) | 8.47 | 7.84 | 11.20 | 7.76 | --- | --- |
| Glycerin | 5.19 | 4.91 | 2.10 | 4.20 | 12.00 | --- |
| Mannitol | 1.77 | --- | --- | 2.01 | 3.11 | --- |
| Xylitol | 15.11 | --- | 12.11 | --- | 6.27 | 78.16 |
| Palatinit (Hydrogenated Isomaltulose) | --- | 63.97 | 49.60 | --- | --- | --- |
| Aspartame | 0.1 | --- | --- | 0.14 | --- | 0.14 |
| Encapsulated Aspartame | --- | --- | --- | 0.22 | --- | 0.22 |
| Alitame | --- | 0.02 | 0.02 | --- | 0.1 | --- |
| Encapsulated Alitame | --- | 0.04 | 0.04 | --- | --- | --- |
| Sucralose (Trade Mark) | 0.11 | --- | --- | --- | 0.15 | --- |
| Lecithin | 0.13 | 0.14 | 0.10 | 0.10 | --- | 0.20 |
| TOTAL | 100 | 100 | 100 | 100 | 100 | 100 |

**Table 7**

| Regular Tack Sugar Gums **EXAMPLES 98-103** | | | | | | |
|---|---|---|---|---|---|---|
| Example | 98 | 99 | 100 | 101 | 102 | 103 |
| Base Example # | 57 | 52 | 44 | 39 | 51 | 40 |
| Base % | 22.38 | 20.60 | 20.08 | 23.11 | 20.02 | 21.01 |
| Flavor | 0.89 (Peppermint Oil) | 0.58 (Spearmint Oil) | 0.86 (Peppermint Oil) | 0.91 (Peppermint Oil) | 1.21 (Fruit Flavor) | 0.98 (Wintergreen Flavor) |
| Flavor | --- | --- | --- | 0.21 (Spearmint Oil) | --- | 0.20 (Spray Dried Menthol) |
| Encapsulated Aspartame | 0.1 | --- | --- | 0.05 | --- | --- |
| Encapsulated Acesulfame K | --- | 0.1 | --- | 0.05 | 0.15 | 0.1 |
| Sucralose (Trade Mark) | --- | --- | 0.1 | --- | --- | 0.09 |
| Sugar | 58.29 | 59.39 | 62.56 | 59.97 | 63.59 | 62.41 |
| Corn Syrup | 17.20 | 18.50 | 15.40 | 14.70 | 13.88 | 14.19 |
| Glycerin | 1.09 | 0.83 | 1.00 | 1.00 | 1.05 | 1.02 |
| Lecithin | 0.05 | --- | --- | --- | .10 | --- |
| TOTAL | 100 | 100 | 100 | 100 | 100 | 100 |

Examples 104-115 are examples of inventive coated pellet gums made with non-wax bases. The gum products of these examples are formed into pellets or balls for subsequent coating. Examples 104-109 are sugar pellets which could be coated with sugar syrups. Such syrups may contain modified starch (0 to 6.0%), compatible flavors and colors (0 to 0.30%), vegetable gums such as gum arabic and cellulose derivatives such as hydroxypropyl methyl cellulose (0 to 20%) in addition to sucrose or starch hydrolyzate in an aqueous solution.

Examples 110-115 are sugarless pellets which can be coated with sugar alcohol solutions such as those of sorbitol, xylitol and palatinit (Trade Mark). These syrups may also contain the same modifiers listed above for sugar syrups.

In both cases (sugar and sugarless) dry coating agent (sugar or sugar alcohol) may be added between layers of coating syrup, a process known as dry charging or soft panning.

Coating may be carried out by any suitable process, most often using a conventional pan, side vented pans, high capacity pans such as those made by Driam or Dumouline, or by continuous panning techniques.

**Table 8**

| Sugar Pellet Gums For Coating **EXAMPLES 104-109** | | | | | | |
|---|---|---|---|---|---|---|
| Example | 104 | 105 | 106 | 107 | 108 | 109 |
| Base Example # | 40 | 36 | 37 | 51 | 52 | 47 |
| Base % | 24.32 | 24.28 | 24.30 | 24.27 | 25.17 | 24.33 |
| Flavor | 0.55 (Spearmint Oil) | 0.73 (Peppermint Oil) | 2.56 (Licorice Powder) | 0.77 (Fruit Flavor) | 0.47 (Spearmint Oil) | 0.61 (Spearmint Oil) |
| Flavor | --- | --- | 0.60 (Menthol/Anethol | --- | 0.15 (Peppermint Oil) | --- |
| Sugar | 52.92 | 52.77 | 50.84 | 52.75 | 52.49 | 52.74 |
| Corn Syrup | 22.16 | 22.12 | 21.60 | 22.11 | 21.62 | 22.22 |
| Encapsulated Alitame | 0.05 | --- | --- | --- | 0.05 | --- |
| Encapsulated Acesulfame K | --- | --- | 0.1 | --- | --- | 0.05 |
| Encapsulated Aspartame | --- | 0.1 | --- | --- | 0.05 | 0.05 |
| Sucralose 〈trade mark〉 | --- | --- | --- | 0.1 | --- | --- |
| TOTAL | 100 | 100 | 100 | 100 | 100 | 100 |

**Table 9**

| Sugarless Pellet Gums For Coating **EXAMPLES 110-115** | | | | | | |
|---|---|---|---|---|---|---|
| Example | 110 | 111 | 112 | 113 | 114 | 115 |
| Base Example # | 33 | 26 | 40 | 29 | 35 | 35 |
| Base % | 31.01 | 33.00 | 32.71 | 33.03 | 30.97 | 31.45 |
| Flavor | 1.20 (Spearmint Oil) | 1.30 (Peppermint Oil) | 1.09 (Spearmint Oil) | 1.50 (Fruit Flavor) | 1.01 (Peppermint Oil) | 1.31 (Fruit Flavor) |
| Flavor | --- | 0.50 (Menthol) | 0.17 (Peppermint Oil) | 0.50 (Lemon Flavor) | 0.21 (Spray Dried Menthol) | --- |
| Sorbitol | 51.46 | 44.06 | 45.56 | 43.81 | 46.69 | 45.99 |
| Calcium Carbonate | 10.01 | 13.00 | 12.16 | 12.93 | 13.04 | 13.33 |
| Glycerin | 6.14 | 8.00 | 8.00 | 7.98 | 7.82 | 7.30 |
| Encapsulated Aspartame | 0.12 | 0.14 | 0.21 | 0.25 | 0.18 | 0.62 |
| Free Aspartame | 0.06 | --- | 0.10 | --- | 0.08 | --- |
| TOTAL | 100 | 100 | 100 | 100 | 100 | 100 |

Inventive bubble gums may be prepared using the bubble gum bases of the present invention such as those listed in Examples 56-74. Illustrative formulations are given as Examples 116-127. Examples 116-121 are sugar bubble gum formulas. Note that Examples 117 and 121 use blends of two inventive bases. This is a technique to optimize processing and texture properties while minimizing the necessity of maintaining different bases for each product and without having additional custom bases compounded. Examples 122-127 are sugarless bubble gum formulas.

**Table 10**

| Sugar Bubble Gums **EXAMPLES 116-121** | | | | | | |
|---|---|---|---|---|---|---|
| Example | 116 | 117 | 118 | 119 | 120 | 121 |
| Base Example # | 69 | 72/74 | 74 | 72 | 59 | 72/69 |
| Base % | 24.02 | 11.00/11.00 | 22.20 | 20.01 | 19.99 | 9.00/13.00 |
| Flavor | 0.80 (Fruit Flavor) | 0.85 (Cream Soda) | 0.60 (Lemon Lime) | 0.60 (Blueberry) | 0.60 (Strawberry) | 0.80 (Cream Soda) |
| Flavor | --- | 0.03 (Vanilla) | --- | --- | --- | 0.02 (Vanilla) |
| Sugar | 55.05 | 59.44 | 55.85 | 58.90 | 59.65 | 57.88 |
| Corn Syrup | 17.68 | 16.53 | 19.54 | 17.99 | 16.88 | 17.44 |
| Lecithin | 0.60 | 0.35 | 0.40 | 0.51 | 0.50 | 0.45 |
| Glycerin | 1.74 | 0.70 | 0.40 | 0.81 | 1.49 | 1.31 |
| Color | 0.06 (Red) | --- | 0.01 (Green) | 0.48 (Blue) | 0.08 (Red) | --- |
| Citric Acid | --- | --- | 0.90 | 0.60 | 0.70 | --- |
| Encapsulated Alitame | 0.05 | --- | --- | --- | 0.05 | --- |
| Encapsulated Aspartame | --- | 0.1 | --- | --- | 0.05 | 0.05 |
| Encapsulated Acesulfame K | --- | --- | 0.1 | --- | --- | 0.05 |
| Sucralose (Trade Mark) | --- | --- | --- | 0.1 | --- | --- |
| TOTAL | 100 | 100 | 100 | 100 | 100 | 100 |

**Table 11**

| Sugarless Bubble Gums **EXAMPLES 122-127** | | | | | | |
|---|---|---|---|---|---|---|
| Example | 122 | 123 | 124 | 125 | 126 | 127 |
| Base Example # | 63 | 64 | 69 | 71 | 71 | 60 |
| Base % | 24.00 | 24.59 | 28.00 | 29.12 | 30.10 | 26.71 |
| Flavor | 1.20 (Fruit Flavor) | 1.41 (Fruit Flavor) | 1.71 (Grape Flavor) | 1.34 (Strawberry Flavor) | 1.11 (Lemon Flavor) | 1.23 (Peach Flavor) |
| Sorbitol | 51.47 | 51.78 | 46.03 | 49.65 | 46.39 | 49.33 |
| Calcium Carbonate | 5.00 | 4.31 | --- | --- | --- | --- |
| Talc | --- | --- | 3.71 | 3.44 | 1.99 | 3.44 |
| Lecithin | 1.00 | 0.91 | 0.84 | 0.61 | 0.86 | 0.75 |
| Citric Acid | --- | --- | --- | 0.31 | 0.31 | --- |
| Malic Acid | --- | --- | 0.21 | 0.11 | 0.31 | 0.16 |
| Tartaric Acid | --- | --- | 0.36 | 0.11 | --- | --- |
| Glycerin | 17.00 | 10.00 | 9.00 | 15.09 | 8.21 | 12.00 |
| Lycasin/Glycerin | --- | 6.79 | 9.61 | --- | 10.41 | 6.00 |
| Color | 0.02 (Red) | 0.01 (Red) | 0.06 (Red/Blue) | 0.02 (Red) | 0.05 (Yellow) | 0.01 (Red) |
| Encapsulated Aspartame | 0.27 | --- | 0.41 | --- | --- | 0.31 |
| Free Aspartame | 0.04 | 0.1 | 0.06 | --- | 0.17 | 0.06 |
| Acesulfame K | --- | --- | --- | 0.11 | --- | --- |
| Encapsulated Alitame | --- | 0.10 | --- | --- | --- | --- |
| Sucralose (Trade Mark) | --- | --- | --- | 0.09 | 0.09 | --- |
| TOTAL | 100 | 100 | 100 | 100 | 100 | 100 |

## Claims

1. A chewing gum free of mineral hydrocarbon wax which also contains no more than 5% natural wax, having controlled sweetener release, comprising from 5 to 35 wt% chewing gum base, which gum base is wax-free, comprising:
from 20 to 60 wt% synthetic elastomer;
from 0 to 30 wt% natural elastomer;
from 5 to 55 wt % elastomer plasticizer;
from 4 to 40 wt% filler; and
from 5 to 40 wt% of at least one softener, at least one of which shall be hydrogenated or partially hydrogenated vegetable oils or a mixture of hydrogenated and partially hydrogenated vegetable oils; said chewing gum further comprising
at least one flavouring agent and water-soluble bulking agent, and
at least one controlled release sweetener ingredient.

2. A chewing gum as claimed in claim 1 which does not include wax.

3. A chewing gum as claimed in claim 1 or claim 2 wherein at least one controlled release sweetener ingredient comprises fast release sweetener or slow release sweetener or a combination thereof.

4. A chewing gum as claimed in claim 1 or claim 2 wherein said controlled release sweetener ingredient comprises at least one fast release sweetener and at least one slow release sweetener.

5. A chewing gum as claimed in claim 3 or claim 4, wherein said fast release sweetener is selected from at least one of the group sucrose, dried invert sugar, fructose, xylitol, aspartame, acesulfame K, alitame, saccharin, cyclamate, encapsulated or dissolved sucralose or mixtures thereof.

6. A chewing gum as claimed in any one of claims 3 to 5, wherein the slow release sweetener is provided by modification or alteration of the release characteristics of a high intensity fast release sweetener.

7. A chewing gum as claimed in claim 6, wherein the high intensity fast release sweetener is modified by encapsulation, spray-drying, spray chilling, fluid-bed coating, coacervation, absorption, extrusion encapsulation, agglomerating, entrapping or any combination of these.

8. A chewing gum as claimed in any one of claims 1 to 7 including at least one low intensity fast release sweetener together with at least one slow release sweetener in the form of a modified or altered high intensity fast release sweetener.

9. A chewing gum as claimed in any one of claims 3 to 8, wherein said slow release sweetener is selected from at least one of the group consisting of sucralose, thaumatin and monellin.

10. A chewing gum as claimed in any one of claims 1 to 9 wherein at least one sweetener has a release profile comparable to the release profile of at least one flavour agent.

11. A chewing gum as claimed in any one of claims 1 to 10 which includes combinations of sugar and sugarless sweeteners.

12. A chewing gum as claimed in any one of claims 1 to 11, wherein natural elastomer is selected from the group consisting of jelutong, lechi caspi, perillo, sorva, massaranduba balata, massaranduba chocolate, nispero, rosin dinha, chicle, gutta hang kang, smoked or liquid latex, guayule, chiguibul, crown gum, pendare, venezuelau chicle, leche de vaca, niger gutta, tunu, chilte, and combinations thereof.

13. A wax-free chewing gum as claimed in any one of claims 1 to 12, wherein natural elastomer is selected from the group consisting of jelutong, sorva, chicle, massaranduba balata, and combinations thereof.

14. A chewing gum as claimed in any one of claims 1 to 13, wherein synthetic elastomer is selected from the group consisting of polyisobutylene, butadiene-styrene copolymer, polyvinyl acetate, vinyl acetate-vinyl laurate copolymer, polyisoprene, isobutylene-isoprene copolymer, and combinations thereof.

15. A chewing gum as claimed in any one of claims 1 to 13, wherein the synthetic elastomer is selected from the group consisting of styrene-butadiene elastomer, isoprene-isobutylene copolymer, polyisobutylene, polyvinyl acetate, and combinations thereof.

16. A chewing gum as claimed in any one of claims 1 to 13, wherein the synthetic elastomer is selected from the group consisting of polyisobutylene, polyvinyl acetate, and combinations thereof.

17. A chewing gum as claimed in anyone of claims 1 to 16, wherein elastomer plasticizer is selected from the group consisting of glycerol esters of rosin, glycerol esters of partially hydrogenated rosin, glycerol esters of polymerized rosin, glycerol esters of partially dimerized rosin, partially hydrogenated methyl esters of rosin, glycerol esters of tal oil rosin, pentaerythritol esters of rosin, methyl esters of rosin, pentaerythritol esters of partially hydrogenated rosin, synthetic terpene resin, natural terpene resin, and combinations thereof.

18. A chewing gum as claimed in any one of claims 1 to 16, wherein the elastomer plasticizer is selected from the group consisting of glycerol esters of partially hydrogenated rosin, methyl esters of rosin, glycerol esters of rosin, terpene resin, and combinations thereof.

19. A chewing gum as claimed in any one of claims 1 to 16, wherein the elastomer plasticizer is selected from the group consisting of glycerol ester of partially hydrogenated wood rosin, glycerol ester of wood rosin, terpene resin, and combinations thereof.

20. A chewing gum as claimed in any one of claims 1 to 19, wherein the filler is selected from the group consisting of calcium carbonate, magnesium carbonate, talc, ground limestone, magnesium silicate, aluminum silicate, clay, alumina, titanium dioxide, mono-, di and tri-calcium phosphates, cellulose, and combinations thereof.

21. A chewing gum as claimed in any one of claims 1 to 19, wherein the filler is selected from the group consisting of calcium carbonate, talc, and combinations thereof.

22. The chewing gum as claimed in any one of claims 1 to 21, wherein the softener is selected from the group consisting of tallow, hydrogenated tallow, hydrogenated vegetable oils, partially hydrogenated vegetable oils, cocoa butter, glycerol monostearate, mono-, di- and triglycerides, acetylated monoglycerides, glyceryl triacetate, lecithin, fatty acids, diacetin, lanolin, and combinations thereof.

23. A chewing gum as claimed in any one of claims 1 to 21, wherein the softener is selected from the group consisting of hydrogenated vegetable oils, glycerol monostearate, lecithin, and combinations thereof.

24. A chewing gum as claimed in any one of claims 1 to 21, wherein the softener is selected from the group consisting of glycerol monostearate, acetylated monoglyceride, glycerol triacetate, and combinations thereof.

25. A chewing gum as claimed in any one of claims 1 to 24, wherein the gum base consists primarily of:
from 25 to 45 wt% synthetic elastomer;
from 10 to 40 wt% elastomer plasticizer;
from 5 to 30 wt% filler; and
from 15 to 35 wt % softener.

26. A chewing gum as claimed in any one of claims 1 to 24 wherein the gum base consists primarily of:
from 12 to 30 wt% natural elastomer;
from 20 to 40 wt% synthetic elastomer;
from 5 to 25 wt% elastomer plasticizer;
from 4 to 25 wt% filler; and
from 15 to 30 wt% softener.

27. The chewing gum as claimed in any one of claims 1 to 24 wherein the gum base consists primarily of:
from 30 to 50 wt% synthetic elastomer;
from 5 to 55 wt% elastomer plasticizer;
from 10 to 35 wt% filler; and
from 5 to 25 wt % softener.

28. A chewing base as described in any one of claims 1 to 12, 15 to 25 and 27 which includes 0% natural elastomer prepared by
adding a first portion of synthetic elastomer and a first portion of filler to a mixer;
adding softener to the mixer along with a second portion of synthetic elastomer and a second portion of filler;
adding elastomer plasticizer to the mixer along with a third portion of synthetic elastomer and a third portion of filler;
blending the ingredients together; and
removing heat at from 30 minutes to 90 minutes into the mixing time of the base production process.

29. A chewing gum comprising a chewing gum base as claimed in claim 28, said base being water insoluble.

30. A chewing gum as claimed in any one of claims 1 to 29, wherein the chewing gum base is water insoluble and further wherein the water soluble bulking agent comprises at least one sweetener having a release profile comparable to the release profile of at least one of the flavouring agents.

31. A chewing gum as claimed in any one of claims 1 to 27 and 29 and 30, wherein the gum has reduced tack to dental surfaces.

32. A chewing gum as claimed in any one of claims 1 to 27 and 29 to 31, wherein the gum is sugarless.

33. A chewing gum as claimed in any one of claims 1 to 27 and 29 to 32, wherein the gum is in the form of a coated pellet or ball.

34. A chewing gum as claimed in any one of claims 1 to 27 and 29 to 32, wherein the gum is a bubble gum.

## Patentansprüche

1. Kaugummi mit kontrollierter Süßungsmittel-Freisetzung, der frei von einem mineralischen Kohlenwasserstoffwachs ist und auch nicht mehr als 5 % Naturwachs enthält, und der 5 bis 35 Gew.-% wachsfreie Kaugummibase enthält, die umfaßt:
20 bis 60 Gew.-% synthetisches Elastomer;
0 bis 30 Gew.-% natürliches Elastomer;
5 bis 55 Gew.-% Elastomer-Plastifizierungsmittel;
4 bis 40 Gew.-% Füllstoff und
5 bis 40 Gew.-% mindestens eines Weichmachers, wobei mindestens einer der Weichmacher ein hydriertes oder teilweise hydriertes Pflanzenöl oder eine Mischung von hydrierten und teilweise hydrierten Pflanzenölen ist, wobei das Kaugummi außerdem enthält
mindestens einen Geschmacks- bzw. Aromastoff und ein wasserlösliches Quellungsmittel sowie mindestens einen Süßungsmittel-Bestandteil mit kontrollierter Freisetzung.

2. Kaugummi nach Anspruch 1, der kein Wachs enthält.

3. Kaugummi nach Anspruch 1 oder 2, bei dem mindestens ein Süßungsmittel-Bestandteil mit kontrollierter Freisetzung umfaßt ein Süßungsmittel mit schneller Freisetzung oder ein Süßungsmittel mit langsamer Freisetzung oder eine Kombination davon.

4. Kaugummi nach Anspruch 1 oder 2, bei dem der Süßungsmittel-Bestandteil mit kontrollierter Freisetzung umfaßt mindestens ein Süßungsmittel mit schneller Freisetzung und mindestens ein Süßungsmittel mit langsamer Freisetzung.

5. Kaugummi nach Anspruch 3 oder 4, bei dem das Süßungsmittel mit schneller Freisetzung ausgewählt wird aus mindestens einem Vertreter der Gruppe Saccharose, getrockneter Invertzucker, Fructose, Xylit, Aspartam, Acesulfam K, Alitam, Saccharin, Cyclamat, eingekapselte oder aufgelöste Sucralose oder Mischungen davon.

6. Kaugummi nach einem der Ansprüche 3 bis 5, bei dem das Süßungsmittel mit langsamer Freisetzung hergestellt worden ist durch Modifizierung oder Änderung der Freisetzungs-Eigenschaffen eines Süßungsmittels mit schneller Freisetzung und hoher Süßkraft.

7. Kaugummi nach Anspruch 6, bei dem das Süßungsmittel mit schneller Freisetzung und hoher Süßkraft modifiziert worden ist durch Einkapselung, Sprühtrocknung, Sprühkühlung, Fließbett-Beschichtung, Coazervation, Absorption, Extrusions-Einkapselung, Agglomeration, Einschluß oder irgendeine Kombination davon.

8. Kaugummi nach einem der Ansprüche 1 bis 7, der mindestens ein Süßungsmittel mit schneller Freisetzung und geringer Süßkraft zusammen mit mindestens einem Süßungsmittel mit langsamer Freisetzung in Form eines modifizierten oder veränderten Süßungsmittels mit schneller Freisetzung und hoher Süßkraft enthält.

9. Kaugummi nach einem der Ansprüche 3 bis 8, bei dem das Süßungsmittel mit langsamer Freisetzung ausgewählt wird aus mindestens einem Vertreter der Gruppe, die besteht aus Sucralose, Thaumatin und Monellin.

10. Kaugummi nach einem der Ansprüche 1 bis 9, bei dem mindestens ein Süßungsmittel ein Freisetzungsprofil hat, das vergleichbar ist mit dem Freisetzungsprofil mindestens eines Geschmacks- bzw. Aromastoffes.

11. Kaugummi nach einem der Ansprüche 1 bis 10, der Kombinationen von Zucker-Süßungsmitteln und zuckerfreien Süßungsmitteln enthält.

12. Kaugummi nach einem der Ansprüche 1 bis 11, bei dem das natürliche Elastomer ausgewählt wird aus der Gruppe, die besteht aus Jelutong, Lechi Caspi, Perillo, Sorva, Massaranduba Balata, Massaranduba Chocolate, Nispero, Rosin Dinha, Chicle, Gutta Hang Kang, geräuchertem oder flüssigem Latex, Guayule, Chiguibul, CrownGum-, Pendare, Venezuela-Chicle, Leche de Vaca, Niger-Gutta, Tunu, Chilte und Kombinationen davon.

13. Wachsfreier Kaugummi nach einem der Ansprüche 1 bis 12, bei dem das natürliche Elastomer ausgewählt wird aus der Gruppe, die besteht aus Jelutong, Sorva, Chicle, Massaranduba Balata und Kombinationen davon.

14. Kaugummi nach einem der Ansprüche 1 bis 13, bei dem das synthetische Elastomer ausgewählt wird aus der Gruppe, die besteht aus Polyisobutylen, Butadien/Styrol-Copolymer, Polyvinylacetat, Vinylacetat/Vinyllaurat-Copolymer, Polyisopren, Isobutylen/Isopren-Copolymer und Kombinationen davon.

15. Kaugummi nach einem der Ansprüche 1 bis 13, bei dem das synthetische Elastomer ausgewählt wird aus der Gruppe, die besteht aus Styrol/Butadien-Elastomer, Isopren/Isobutylen-Copolymer, Polyisobutylen, Polyvinylacetat und Kombinationen davon.

16. Kaugummi nach einem der Ansprüche 1 bis 13, bei dem das synthetische Elastomer ausgewählt wird aus der Gruppe, die besteht aus Polyisobutylen, Polyvinylacetat und Kombinationen davon.

17. Kaugummi nach einem der Ansprüche 1 bis 16, bei dem das Elastomer-Plastifizierungsmittel ausgewählt wird aus der Gruppe, die besteht aus Glycerinestern von Rosin (Kolophonium), Glycerinestern von teilweise hydriertem Rosin, Glycerinestern von polymerisiertem Rosin, Glycerinestern von teilweise dimerisiertem Rosin, teilweise hydrierten Methylestern von Rosin, Glycerinestern von Tallölrosin, Pentaerythritestern von Rosin, Methylestern von Rosin, Pentaerythritestern von teilweise hydriertem Rosin, synthetischem Terpenharz, natürlichem Terpenharz und Kombinationen davon.

18. Kaugummi nach einem der Ansprüche 1 bis 16, bei dem das Elastomer-Plastiflzierungsmittel ausgewählt wird aus der Gruppe, die besteht aus Glycerinestern von teilweise hydriertem Rosin, Methylestern von Rosin, Glycerinestern von Rosin, Terpenharz und Kombinationen davon.

19. Kaugummi nach einem der Ansprüche 1 bis 16, bei dem das Elastomer-Plastifizierungsmittel ausgewählt wird aus der Gruppe, die besteht aus Glycerinester von teilweise hydriertem Wurzelrosin (Extraktionsrosin), Glycerinester von Wurzelrosin (Extraktionsrosin), Terpenharz und Kombinationen davon.

20. Kaugummi nach einem der Ansprüche 1 bis 19, bei dem der Füllstoff ausgewählt wird aus der Gruppe, die besteht aus Calciumcarbonat, Magnesiumcarbonat, Talk, gemahlenem Kalkstein, Magnesiumsilicat, Aluminiumsilicat, Ton, Aluminiumoxid, Titandioxid, Mono-, Di- und Tri-calciumphosphaten, Cellulose und Kombinationen davon.

21. Kaugummi nach einem der Ansprüche 1 bis 19, bei dem der Füllstoff ausgewählt wird aus der Gruppe, die besteht aus Calciumcarbonat, Talk und Kombinationen davon.

22. Kaugummi nach einem der Ansprüche 1 bis 21, bei dem der Weichmacher ausgewählt wird aus der Gruppe, die besteht aus Tag, hydriertem Tag, hydrierten Pflanzenölen, teilweise hydrierten Pflanzenölen, Kakaobutter, Glycerinmonostearat, Mono-, Di- und Triglyceriden, acetylierten Monoglyceriden, Glyceryltriacetat, Lecithin, Fettsäuren, Diacetin, Lanolin und Kombinationen davon.

23. Kaugummi nach einem der Ansprüche 1 bis 21, bei dem der Weichmacher ausgewählt wird aus der Gruppe, die besteht aus hydrierten Pflanzenölen, Glycerinmonostearat, Lecithin und Kombinationen davon.

24. Kaugummi nach einem der Ansprüche 1 bis 21, bei dem der Weichmacher ausgewählt wird aus der Gruppe, die besteht aus Glycerinmonostearat, acetyliertem Monoglycerid, Glycerintriacetat und Kombinationen davon.

25. Kaugummi nach einem der Ansprüche 1 bis 24, bei dem die Kaugummibase in erster Linie besteht aus:
25 bis 45 Gew.-% synthetischem Elastomer,
10 bis 40 Gew.-% Elastomer- Plastifizierungsmittel,
5 bis 30 Gew.-% Füllstoff; und
15 bis 35 Gew.-% Weichmacher.

26. Kaugummi nach einem der Ansprüche 1 bis 24, bei dem die Kaugummibase in erster Linie besteht aus:
12 bis 30 Gew.-% natürlichem Elastomer,
20 bis 40 Gew.-% synthetischem Elastomer,
5 bis 25 Gew.-% Elastomer-Plastifizierungsmittel,
4 bis 25 Gew.-% Füllstoff; und
15 bis 30 Gew.-% Weichmacher.

27. Kaugummi nach einem der Ansprüche 1 bis 24, bei dem die Kaugummibase in erster Linie besteht aus:
30 bis 50 Gew.-% synthetischem Elastomer;
5 bis 55 Gew.-% Elastomer-Plastifizierungsmittel;
10 bis 35 Gew.-% Füllstoff; und
5 bis 25 Gew.-% Weichmacher.

28. Kaugummibase, wie sie in einem der Ansprüche 1 bis 12, 15 bis 25 und 27 beschrieben ist, die 0 % natürliches Elastomer enthält und hergestellt worden ist durch
Einführen eines ersten Teils des synthetischen Elastomers und eines ersten Teils des Füllstoffes in einen Mischer;
Einführung des Weichmachers in den Mischer zusammen mit einem zweiten Teil des synthetischen Elastomers und einem zweiten Teil des Füllstoffes;
Einführung des Elastomer-Plastifizierungsmittels in den Mischer zusammen mit einem dritten Teil des synthetischen Elastomers und einem dritten Teil des Füllstoffes;
Vermischen der Bestandteile miteinander; und
Abführung von Wärme für 30 bis 90 min innerhalb der Mischzeit des Basen-Herstellungsprozesses.

29. Kaugummi, der eine Kaugummi-Base nach Anspruch 28 enthält, die in Wasser unlöslich ist.

30. Kaugummi nach einem der Ansprüche 1 bis 29, bei dem die Kaugummi-Base in Wasser unlöslich ist und bei dem außerdem das wasserlösliche Quellungsmittel mindestens ein Süßungsmittel umfaßt, das ein Freisetzungsprofil aufweist, das vergleichbar ist mit dem Freisetzungsprofil mindestens eines der Geschmacks- bzw. Aromastoffe.

31. Kaugummi nach einem der Ansprüche 1 bis 27 und 29 und 30, der an den Zahnoberflächen weniger klebt (haftet).

32. Kaugummi nach einem der Ansprüche 1 bis 27 und 29 bis 31, der zuckerfrei ist.

33. Kaugummi nach einem der Ansprüchen 1 bis 27 und 29 bis 32, der in Form eines beschichteten Pellets oder einer beschichteten Kugel vorliegt.

34. Kaugummi nach einem der Ansprüche 1 bis 27 und 29 bis 32, der ein Blasen-Kaugummi (Bubble Gum) ist.

## Revendications

1. Gomme à mâcher dépourvue de cire hydrocarbonée minérale et qui, en outre, ne contient pas plus de 5 % de cire naturelle, ayant une libération contrôlée de l'édulcorant, comprenant de 5 à 35 % en poids de base de gomme à mâcher, ladite base de gomme étant dépourvue de cire, comprenant :
de 20 à 60 % en poids d'élastomère synthétique ;
de 0 à 30 % en poids d'élastomère naturel ;
de 5 à 55 % en poids de plastifiant d'élastomère ;
de 4 à 40 % en poids de charge ; et
de 5 à 40 % en poids d'au moins un émollient, au moins un de ces émollients étant formé d'huiles végétales hydrogénées ou partiellement hydrogénées ou d'un mélange d'huiles végétales hydrogénées et d'huiles végétales partiellement hydrogénées ; ladite gomme à mâcher comprenant, en outre, au moins un agent aromatisant et un agent de charge soluble dans l'eau et au moins un ingrédient édulcorant à libération contrôlée.

2. Gomme à mâcher selon la revendication 1, ne contenant pas de cire.

3. Gomme à mâcher selon la revendication 1 ou la revendication 2, dans laquelle au moins un ingrédient édulcorant à libération contrôlée comprend un édulcorant à libération rapide ou un édulcorant à libération lente ou une combinaison de ceux-ci.

4. Gomme à mâcher selon la revendication 1 ou la revendication 2, dans laquelle ledit ingrédient édulcorant à libération maîtrisée comprend au moins un édulcorant à libération rapide et au moins un édulcorant à libération lente.

5. Gomme à mâcher selon la revendication 3 ou la revendication 4, dans laquelle ledit édulcorant à libération rapide est choisi parmi au moins un des éléments de l'ensemble constitué par le saccharose, le sucre inverti séché, le fructose, le xylitol, l'aspartame, l'acésulfame K, l'alitame, la saccharine, le cyclamate, le sucralose encapsulé ou dissous, ou des mélanges de ceux-ci.

6. Gomme à mâcher selon l'une quelconque des revendications 3 à 5, dans laquelle l'édulcorant à libération lente est fourni par modification ou transformation des caractéristiques de libération d'un édulcorant d'intensité élevée à libération rapide.

7. Gomme à mâcher selon la revendication 6, dans laquelle l'édulcorant d'intensité élevée à libération rapide est modifié par encapsulation, séchage par pulvérisation, refroidissement brusque par pulvérisation, enrobage en lit fluidisé, coacervation, absorption, encapsulation par extrusion, agglomération, piégeage, ou au moyen de n'importe quelle combinaison de ces techniques.

8. Gomme à mâcher selon l'une quelconque des revendications 1 à 7, comprenant au moins un édulcorant de faible intensité à libération rapide conjointement avec au moins un édulcorant à libération lente sous la forme d'un édulcorant d'intensité élevée à libération rapide modifiée ou transformée.

9. Gomme à mâcher selon l'une quelconque des revendications 3 à 8, dans laquelle ledit édulcorant à libération lente est choisi parmi au moins un élément de l'ensemble constitué par le sucralose, la thaumatine et la monelline.

10. Gomme à mâcher selon l'une quelconque des revendications 1 à 9, dans laquelle au moins un édulcorant a des propriétés de libération comparables aux propriétés de libération d'au moins un agent aromatisant.

11. Gomme à mâcher selon l'une quelconque des revendications 1 à 10, comprenant des combinaisons d'édulcorants sucrés et d'édulcorants sans sucre.

12. Gomme à mâcher selon l'une quelconque des revendications 1 à 11, dans laquelle l'élastomère naturel est choisi dans l'ensemble constitué par les substances qu'on connaît sous les noms de jelutong, lechi caspi, perillo, sorva, massaranduba balata, massaranduba chocolate, nispero, rosin dinha, chicle, gutta hang kang, latex fumé ou liquide, guayule, chiguibul, crown gum, pendare, chicle vénézuela, leche de vaca, niger gutta, tunu, chilte et leurs combinaisons.

13. Gomme à mâcher sans cire selon l'une quelconque des revendications 1 à 12, dans laquelle l'élastomère naturel est choisi dans l'ensemble constitué par les substances qu'on connaît sous les noms de jelutong, sorva, chicle, massaranduba balata et leurs combinaisons.

14. Gomme à mâcher selon l'une quelconque des revendications 1 à 13, dans laquelle l'élastomère synthétique est choisi dans l'ensemble constitué par le polyisobutylène, un copolymère de butadiène-styrène, l'acétate de polyvinyle, un copolymère d'acétate de vinyle-laurate de vinyle, le polyisoprène, un copolymère d'isobutylène-isoprène et des combinaisons de ceux-ci.

15. Gomme à mâcher selon l'une quelconque des revendications 1 à 13, dans laquelle l'élastomère synthétique est choisi dans l'ensemble constitué par un élastomère de styrène-butadiène, un copolymère d'isoprène-isobutylène, le polyisobutylène, l'acétate de polyvinyle et des combinaisons de ceux-ci.

16. Gomme à mâcher selon l'une quelconque des revendications 1 à 13, dans laquelle l'élastomère synthétique est choisi dans l'ensemble constitué par le polyisobutylène, l'acétate de polyvinyle et des combinaisons de ceux-ci.

17. Gomme à mâcher selon l'une quelconque des revendications 1 à 16, dans laquelle le plastifiant d'élastomère est choisi dans l'ensemble constitué par les esters de glycérol de colophane, les esters de glycérol de colophane partiellement hydrogénée, les esters de glycérol de colophane polymérisée, les esters de glycérol de colophane partiellement dimérisée, les esters méthyliques partiellement hydrogénés de colophane, les esters de glycérol de colophane de tallol, les esters de pentaérythritol de colophane, les esters méthyliques de colo-phane, les esters de pentaérythritol de colophane partiellement hydrogénée, une résine terpénique synthétique, une résine terpénique naturelle et des combinaisons de ceux-ci.

18. Gomme à mâcher selon l'une quelconque des revendications 1 à 16, dans laquelle le plastifiant d'élastomère est choisi dans l'ensemble constitué par les esters de glycérol de colophane partiellement hydrogénée, les esters méthyliques de colophane, les esters de glycérol de colophane, une résine terpénique et des combinaisons de ceux-ci.

19. Gomme à mâcher selon l'une quelconque des revendications 1 à 16, dans laquelle le plastifiant d'élastomère est choisi dans l'ensemble constitué par un ester de glycérol de résine de térébenthine partiellement hydrogénée, un ester de glycérol de résine de térébenthine, une résine terpénique et des combinaisons de ceux-ci.

20. Gomme à mâcher selon l'une quelconque des revendications 1 à 19, dans laquelle la charge est choisie dans l'ensemble constitué par le carbonate de calcium, le carbonate de magnésium, le talc, le calcaire broyé, le silicate de magnésium, le silicate d'aluminium, l'argile, l'alumine, le dioxyde de titane, les phosphates mono-, di- et tricalciques, la cellulose et des combinaisons de ceux-ci.

21. Gomme à mâcher selon l'une quelconque des revendications 1 à 19, dans laquelle la charge est choisie dans l'ensemble constitué par le carbonate de calcium, le talc et des combinaisons de ceux-ci.

22. Gomme à mâcher selon l'une quelconque des revendications 1 à 21, dans laquelle l'émollient est choisi dans l'ensemble constitué par le suif, le suif hydrogéné, les huiles végétales hydrogénées, les huiles végétales partiellement hydrogénées, le beurre de cacao, le monostéarate de glycérol, les mono-, di- et triglycérides, les monoglycérides acétylés, le triacétate de glycéryle, la lécithine, les acides gras, la diacétine, la lanoline et des combinaisons de ceux-ci.

23. Gomme à mâcher selon l'une quelconque des revendications 1 à 21, dans laquelle l'émollient est choisi dans l'ensemble constitué par les huiles végétales hydrogénées, le monostéarate de glycérol, la lécithine et des combinaisons de ceux-ci.

24. Gomme à mâcher selon l'une quelconque des revendications 1 à 21, dans laquelle l'émollient est choisi dans l'ensemble constitué par le monostéarate de glycérol, un monoglycéride acétylé, le triacétate de glycérol et des combinaisons de ceux-ci.

25. Gomme à mâcher selon l'une quelconque des revendications 1 à 24, dans laquelle la base de gomme est constituée essentiellement :
de 25 à 45 % en poids d'élastomère synthétique ;
de 10 à 40 % en poids de plastifiant d'élastomère ;
de 5 à 30 % en poids de charge ; et
de 15 à 35 % en poids d'émollient.

26. Gomme à mâcher selon l'une quelconque des revendications 1 à 24, dans laquelle la base de gomme est constituée essentiellement :
de 12 à 30 % en poids d'élastomère naturel ;
de 20 à 40 % en poids d'élastomère synthétique ;
de 5 à 25 % en poids de plastifiant d'élastomère ;
de 4 à 25 % en poids de charge ; et
de 15 à 30 % en poids d'émollient.

27. Gomme à mâcher selon l'une quelconque des revendications 1 à 24, dans laquelle la base de gomme est constituée essentiellement :
de 30 à 50 % en poids d'élastomère synthétique ;
de 5 à 55 % en poids de plastifiant d'élastomère ;
de 10 à 35 % en poids de charge ; et
de 5 à 25 % en poids d'émollient.

28. Base (de gomme) à mâcher telle que décrite dans l'une quelconque des revendications 1 à 12, 15 à 25 et 27, comprenant 0 % d'élastomère naturel, qu'on prépare en :
ajoutant une première partie d'élastomère synthétique et une première partie de charge dans un mélangeur ;
ajoutant un émollient dans le mélangeur, en même temps qu'une seconde partie d'élastomère synthétique et une seconde partie de charge ;
ajoutant un plastifiant d'élastomère dans le mélangeur, en même temps qu'une troisième partie d'élastomère synthétique et une troisième partie de charge ;
mélangeant les ingrédients ensemble ; et
éliminant la chaleur au bout de 30 minutes à 90 minutes pendant le temps de mixtion du procédé de préparation de la base.

29. Gomme à mâcher comprenant une base de gomme à mâcher selon la revendication 28, ladite base étant insoluble dans l'eau.

30. Gomme à mâcher selon l'une quelconque des revendications 1 à 29, dans laquelle la base de gomme à mâcher est insoluble dans l'eau et dans laquelle, en outre, l'agent de charge soluble dans l'eau comprend au moins un édulcorant ayant des propriétés de libération comparables aux propriétés de libération d'au moins un des agents aromatisants.

31. Gomme à mâcher selon l'une quelconque des revendications 1 à 27 et 29 et 30, dans laquelle la gomme a une pégosité réduite sur la surface des dents.

32. Gomme à mâcher selon l'une quelconque des revendications 1 à 27 et 29 à 31, ladite gomme étant sans sucre.

33. Gomme à mâcher selon l'une quelconque des revendications 1 à 27 et 29 à 32, ladite gomme ayant la forme d'un granule enrobé ou d'une bille enrobée.

34. Gomme à mâcher selon l'une quelconque des revendications 1 à 27 et 29 à 32, ladite gomme étant une gomme à faire des bulles ("*bubble gum*").
